# EUROPEAN PATENT APPLICATION

(11) **EP 4 834 122 A1**
(43) Date of publication of application: **04.11.2026**
(21) Application number: 24911855.5
(22) Date of filing: 28.08.2024
(51) Int. Cl.: A23K 50/10, A23K 10/37, A23K 20/20, A23K 20/105, A23K 20/111, A23K 20/142, A23K 20/158, A23K 40/35

(54) **FEED FOR RUMINANTS OBTAINED BY COMBINING METHANE EMISSION INHIBITOR AND LUMEN-PROTECTED AMINO ACID**

(30) Priority: 26.12.2023 JP 2023219983
(71) Applicant: AJINOMOTO CO., INC., Chuo-ku Tokyo 104-8315 (JP)
(72) Inventor: TOYOTA KAMBARA, Mao, Kawasaki-shi, Kanagawa 210-8681 (JP); NAKAJIMA, Daiki, Kawasaki-shi, Kanagawa 210-8681 (JP); MIURA, Makoto, Kawasaki-shi, Kanagawa 210-8681 (JP); HARUNO, Atsushi, Kawasaki-shi, Kanagawa 210-8681 (JP); UENO, Yutaka, Kamiina-gun Nagano 399-4598 (JP)
(74) Representative: Strehl & Partner mbB
(86) International application number: PCT/JP2024/030790
(87) International publication number: WO 2025/141960

(57) **Abstract**

The object of the present invention is to provide a feedstuff and the like that can effectively suppress methane emissions by ruminants.

The present invention relates to a feedstuff for ruminants and the like, containing a methane emission inhibitor and rumen-protected amino acid in combination.

## Description

### [Technical Field]

The present invention relates to a feedstuff for ruminants. The present invention also relates to a method for raising ruminants and a method for suppressing methane emission by the ruminants, including feeding the feedstuff to the ruminants.

### [Background Art]

Methane (CH₄) is a greenhouse gas having a significant impact on global warming next to carbon dioxide. While methane originates from a variety of sources, it is known to be produced in large quantities by ruminants such as cattle. In ruminants, methane production occurs in First stomach (rumen) by multiple methanogenic bacteria, and the produced methane is mainly emitted as belching (burp).

In the 26th Conference of the Parties to the United Nations Framework Convention on Climate Change (COP26) held in the United Kingdom in November 2021, Japan, along with over 100 other countries including the United States and the EU, agreed to reduce methane emission level by at least 30%, compared to 2020, by 2030. Therefore, there is a global need for techniques that effectively reduce methane emission from ruminants.

Conventionally, in order to suppress methane emission from ruminants, it has been proposed to have ruminants ingest mannosylerythritol lipids and/or rhamnolipids, or to have them ingest bromoform and allicin (Patent Literatures 1 and 2). It has also been proposed to feed ruminants an amino acid balanced feedstuff that meets their amino acid requirements (Patent Literature 3). However, there has been a demand for the establishment of a technique that can more effectively suppress methane emission from ruminants.

### [Citation List]

### [Patent Literature]

[Patent Literature 1]
   JP 2009-5676 A
[Patent Literature 2]
   WO 2022/136857
[Patent Literature 3]
   WO 2022/039942

### [Summary of Invention]

### [Technical Problem]

The present invention has been made in view of the aforementioned circumstances, and the problem to be solved is to provide a feedstuff that can effectively suppress methane emission by ruminants.

Also, in one embodiment, the present invention aims to provide a novel method for raising ruminants that can suppress methane emission by ruminants and can raise ruminants.

In addition, in one embodiment, the present invention aims to provide a novel method for suppressing methane emissions by ruminants.

In addition, in one embodiment, the present invention aims to provide a feedstuff that can increase the propionic acid concentration in the rumen of ruminants. In one embodiment, the present invention aims to provide a feedstuff that can increase the proportion of Selenomonadaceae family bacteria in the bacteria constituting the rumen microbiota of ruminants.

In addition, in one embodiment, the present invention aims to provide a feedstuff that can increase the butyric acid concentration in the rumen of ruminants. In one embodiment, the present invention aims to provide a feedstuff that can decrease the acetic acid concentration in the rumen of ruminants. In one embodiment, the present invention aims to provide a feedstuff that can increase the proportion of Lachnospiraceae family bacteria in the bacteria constituting the rumen microbiota of ruminants.

In addition, in one embodiment, the present invention aims to provide a feedstuff that can increase the proportion of at least one selected from the group consisting of Bacteroidota phylum bacteria (e.g., Prevotellaceae family bacteria, Bacteroidales RF-16 group family bacteria, etc.), Proteobacteria phylum bacteria (e.g., Succinivibrionaceae family bacteria, etc.), Firmicutes phylum bacteria (e.g., Ruminococcaceae family bacteria, etc.), and Fibrobacterota phylum bacteria (e.g., Fibrobacteraceae family bacteria, etc.) in the bacteria constituting the rumen microbiota of ruminants.

### [Solution to Problem]

The present inventors have conducted intensive studies in an attempt to solve the aforementioned problems and found that methane emission by ruminants can be effectively suppressed by feeding ruminants a feedstuff containing a methane emission inhibitor and a rumen-protected amino acid in combination (feedstuff containing a combination of a methane emission inhibitor and a rumen-protected amino acid). They have conducted further studies and completed the present invention.

That is, the present invention provides the following.
[1] A feedstuff for ruminants, comprising a methane emission inhibitor and a rumen-protected amino acid in combination.
[2] The feedstuff of [1], which has a higher action in increasing a propionic acid concentration in the rumen of ruminants compared to the aforementioned methane emission inhibitor.
[3] The feedstuff of [1] or [2], which has a higher action in increasing a butyric acid concentration in the rumen of ruminants compared to the aforementioned methane emission inhibitor.
[4] The feedstuff of any one of [1] to [3], which has a higher action in decreasing an acetic acid concentration in the rumen of ruminants compared to the aforementioned methane emission inhibitor.
[5] The feedstuff of any one of [1] to [4], which has a higher action in increasing the proportion of Selenomonadaceae family bacteria in the bacteria constituting the rumen microbiota of ruminants, compared to the aforementioned methane emission inhibitor.
[6] The feedstuff of any one of [1] to [5], which has a higher action in increasing the proportion of Lachnospiraceae family bacteria in the bacteria constituting the rumen microbiota of ruminants, compared to the aforementioned methane emission inhibitor.
[7] The feedstuff of any one of [1] to [6], which has a higher action in increasing the proportion of at least one selected from the group consisting of Bacteroidota phylum bacteria, Proteobacteria phylum bacteria, Firmicutes phylum bacteria, and Fibrobacterota phylum bacteria, in the bacteria constituting the rumen microbiota of ruminants, compared to the aforementioned methane emission inhibitor.
[8] The feedstuff of any one of [1] to [7], wherein the aforementioned amino acid comprises an essential amino acid.
[9] The feedstuff of any one of [1] to [8], wherein the aforementioned amino acid comprises at least one selected from the group consisting of lysine, methionine, arginine, and histidine.
[10] The feedstuff of any one of [1] to [9], wherein the aforementioned methane emission inhibitor comprises at least one selected from the group consisting of organic compounds containing a nitrooxy group, cashew nut shell liquids, polyphenols, nitrates, essential oils, plant extracts, halogenated methane analogues, fatty acid calcium salts, saponins, and organic acids.
[11] The feedstuff of any one of [1] to [10], wherein the aforementioned methane emission inhibitor comprises at least one selected from the group consisting of 3-nitrooxypropanol, cashew nut shell liquids, tannic acid, essential oils, plant extracts, and bromoform.
[12] The feedstuff of any one of [1] to [11], wherein the aforementioned methane emission inhibitor comprises at least one selected from the group consisting of 3-nitrooxypropanol, cashew nut shell liquids, tannic acid, essential oils, and plant extracts.
[13] The feedstuff of any one of [1] to [12], wherein a crude protein content of the aforementioned feedstuff is 0.1 to 10% DM lower than a crude protein content of a feedstuff used up to the start of feeding the aforementioned feedstuff.
[14] The feedstuff of any one of [1] to [13], wherein the crude protein content is 10 to 20% DM.
[15] A method for raising a ruminant, comprising feeding the ruminant the feedstuff of any one of [1] to [14].
[16] A method for suppressing methane emission by a ruminant, comprising feeding the ruminant the feedstuff of any one of [1] to [14].
[17] A method for improving an effect of a methane emission inhibitor, comprising adding a rumen-protected amino acid to a feedstuff for a ruminant to which the methane emission inhibitor is supplied.
[18] The method of [17], comprising reducing a crude protein content of the aforementioned feedstuff by 0.1 to 10% DM.
[19] The method of [17] or [18], wherein the amino acid includes an essential amino acid.
[20] The method of any one of [17] to [19], wherein the aforementioned amino acid includes at least one selected from the group consisting of lysine, methionine, arginine, and histidine.
[21] The method of any one of [17] to [20], wherein the aforementioned methane emission inhibitor comprises at least one selected from the group consisting of organic compounds containing a nitrooxy group, cashew nut shell liquids, polyphenols, nitrates, essential oils, plant extracts, halogenated methane analogues, fatty acid calcium salts, saponins, and organic acids.
[22] The method of any one of [17] to [21], wherein the aforementioned methane emission inhibitor comprises at least one selected from the group consisting of 3-nitrooxypropanol, cashew nut shell liquids, tannic acid, essential oils, plant extracts, and bromoform.
[23] The method of any one of [17] to [22], wherein the aforementioned methane emission inhibitor comprises at least one selected from the group consisting of 3-nitrooxypropanol, cashew nut shell liquids, tannic acid, essential oils, and plant extracts.
[24] The method of any one of [17] to [23], comprising adjusting a crude protein content of the aforementioned feedstuff to 10 to 20% DM.
[25] The method of any one of [17] to [24], wherein the improvement of the effect of the methane emission inhibitor is improvement of an action to increase a propionic acid concentration in the rumen of a ruminant.
[26] The method of any one of [17] to [25], wherein the improvement of the effect of the methane emission inhibitor is improvement of an action to increase a butyric acid concentration in the rumen of a ruminant.
[27] The method of any one of [17] to [26], wherein the improvement of the effect of the methane emission inhibitor is improvement of an action to decrease an acetic acid concentration in the rumen of a ruminant.
[28] The method of any one of [17] to [27], wherein the improvement of the effect of the methane emission inhibitor is improvement of an action to increase the proportion of Selenomonadaceae family bacteria in the bacteria constituting the rumen microbiota of a ruminant.
[29] The method of any one of [17] to [28], wherein the improvement of the effect of the methane emission inhibitor is improvement of an action to increase the proportion of Lachnospiraceae family bacteria in the bacteria constituting the rumen microbiota of a ruminant.
[30] The method of any one of [17] to [29], wherein the improvement of the effect of the methane emission inhibitor is improvement of an action to increase the proportion of at least one selected from the group consisting of Bacteroidota phylum bacteria, Proteobacteria phylum bacteria, Firmicutes phylum bacteria, and Fibrobacterota phylum bacteria in the bacteria constituting the rumen microbiota of a ruminant.

### [Advantageous Effects of Invention]

According to the present invention, a feedstuff that can effectively suppress methane emission by ruminants can be provided.

In addition, according to the present invention, a method for raising ruminants that can suppress methane emission by ruminants and can raise ruminants can be provided.

In addition, according to the present invention, a method for suppressing methane emission by ruminants can be provided.

In addition, according to the present invention, a feedstuff that can increase the propionic acid concentration in the rumen of ruminants can be provided. The present invention can provide a feedstuff that can increase the proportion of Selenomonadaceae family bacteria in the bacteria constituting the rumen microbiota of ruminants.

In addition, according to the present invention, a feedstuff that can increase the butyric acid concentration in the rumen of ruminants can be provided. The present invention can provide a feedstuff that can decrease the acetic acid concentration in the rumen of ruminants. The present invention can provide a feedstuff that can increase the proportion of Lachnospiraceae family bacteria in the bacteria constituting the rumen microbiota of ruminants.

In addition, according to the present invention, a feedstuff that can increase the proportion of at least one selected from the group consisting of Bacteroidota phylum bacteria (e.g., Prevotellaceae family bacteria, Bacteroidales RF-16 group family bacteria, etc.), Proteobacteria phylum bacteria (e.g., Succinivibrionaceae family bacteria, etc.), Firmicutes phylum bacteria (e.g., Ruminococcaceae family bacteria, etc.), and Fibrobacterota phylum bacteria (e.g., Fibrobacteraceae family bacteria, etc.), in the bacteria constituting the rumen microbiota of ruminants can be provided.

### [Description of Embodiments]

The feedstuff for ruminants of the present invention (at times referred to as "the feedstuff of the present invention" in the present specification) is composed of a combination of a methane emission inhibitor and rumen-protected amino acid. In other words, it includes a combination of a methane emission inhibitor and rumen-protected amino acid. In the present invention, "ruminant" is a general term for animals belonging to Suborder Ruminantia, Order Artiodactyla, Class Mammalia. More specifically, it refers to herbivorous mammals that have a ruminant stomach divided into three or four chambers and have the habit of ruminating on food. Specific examples of ruminants include, but are not limited to, cattle, goats, sheep, and the like.

In the present invention, "methane emission inhibitor" is a general term for substances that have the action of suppressing methane emission by ruminants (at times referred to as "methane emission suppressive action" in the present specification). By feeding a methane emission inhibitor to ruminants (e.g., cattle, etc.), the methane contained in the belching of the ruminants can be reduced. The methane emission inhibitor that can be used in the present invention is not particularly limited as long as it has a methane emission suppressive action (that is, action of suppressing methane emission by ruminants). Examples include organic compounds having a nitrooxy group, cashew nut shell liquids, polyphenols, nitrates, essential oils, plant extracts, halogenated methane analogues, fatty acid calcium salt, saponins, organic acids, and the like. Only one of these methane emission inhibitors may be used or two or more thereof may be used in combination.

The organic compound having a nitrooxy group (-O-NO₂) that can be used in the present invention is not particularly limited as long as it has a methane emission suppressive action. Examples include 3-nitrooxypropanol, racemate-4-phenylbutane-1,2-diyl dinitrate, 2-(hydroxymethyl)-2-(nitrooxymethyl)-1,3-propanediol, N-ethyl-3-nitrooxy-propionic sulfonyl amide, 5-nitrooxy-pentanenitrile, 5-nitrooxy-pentane, 3-nitrooxy-propyl propionate, 1,3-bis-nitrooxypropane, 1,4-bis-nitrooxybutane, 1,5-bis-nitrooxypentane, 3-nitrooxy-propyl benzoate, 3-nitrooxy-propyl hexanoate, 3-nitrooxy-propyl 5-nitrooxy-hexanoate, benzylnitrate, isosorbid-dinitrate, N-[2-(nitrooxy)ethyl]-3-pyridinecarboxamide, 3-nitrooxy propionic acid, methyl-3-nitrooxy propionate, ethyl-3-nitrooxy propionate, ethyl-4-nitrooxy butanoate, ethyl-3-nitrooxy butanoate, 5-nitrooxy pentanoic acid, ethyl-5-nitrooxy pentanoate, 6-nitrooxy hexanoic acid, ethyl-6-nitrooxy hexanoate, ethyl-4-nitrooxy-cyclohexylcarboxylate, 8-nitrooxy octanoic acid, ethyl-8-nitrooxy octanoate, 11-nitrooxy undecanoic acid, ethyl-11-nitrooxy undecanoate, 5-nitrooxy-pentanoic amide, 5-nitrooxy-N-methyl-pentanoic amide, preferably 3-nitrooxypropanol, ethyl-3-nitrooxy propionate, methyl-3-nitrooxy propionate, and 3-nitrooxy propionic acid, particularly preferably 3-nitrooxypropanol. Only one of these compounds may be used or two or more thereof may be used in combination.

3-Nitrooxypropanol (3-NOP) is a nitrate ester of 1,3-propanediol, represented by the following formula (CAS registration number: 100502-66-7).

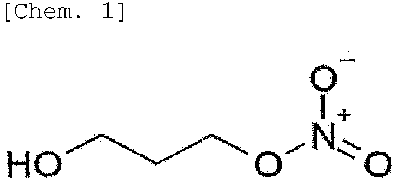

The organic compounds having a nitrooxy group that can be used in the present invention may be in the form of salts, and in the present invention, the "organic compounds having a nitrooxy group" is a concept that also includes such salts. The salt is not particularly limited as long as it can be fed to ruminants, and examples include salts with inorganic bases, salts with inorganic acids, salts with organic acids, and the like.

The cashew nut shell liquid (CNSL) is an oily liquid obtained by pressing cashew nut shells, and is generally also called cashew nut shell oil or cashew nut oil.

Polyphenols are antioxidants produced when plants perform photosynthesis, and are components that can be involved in the bitterness, astringency, and color of plants. The polyphenols that can be used in the present invention are not particularly limited as long as they have a methane emission suppressive action. Examples include tannins, chlorogenic acid, catechins, isoflavones, flavonoids, and the like. Tannin is a type of natural polyphenol compound derived from plants, and is a general term for compounds that have the property of binding with proteins, metal ions, etc. to form sparingly soluble salts. Tannin can be classified into hydrolyzable tannins, in which aromatic compounds (e.g., gallic acid, ellagic acid, etc.) and saccharide (e.g., glucose, etc.) form ester bonds, and condensed tannins, in which compounds with a flavanol skeleton are polymerized. Tannin that can be used in the present invention is preferably hydrolyzable tannin, and tannic acid is particularly preferred. Tannin that can be used in the present invention is not particularly limited as to the plant from which the tannin is derived, as long as it has a methane emission suppressive action. Examples include Japanese gall, Oak gall, tea, chestnuts, persimmons, mimosa, eucalyptus, quebracho, and the like. The form of the tannin that can be used in the present invention is not particularly limited. For example, a liquid substance (extract) containing tannin extracted from a plant may be used as is, or an extract containing plant-derived tannin may be subjected to a dry treatment or the like and used as a powder.

The nitrate is not particularly limited as long as it can be fed to ruminants. Examples include potassium nitrate, sodium nitrate, calcium nitrate, ammonium nitrate, and the like. Nitrates may be used in combination with cysteine and/or cystine.

Essential oils are volatile oily substances obtained from plants and having an aroma characteristic of the plant. The essential oils used in the present invention are not particularly limited as to the plant from which they are derived as long as they have a methane emission suppressive action. Examples include coriander, eucalyptus, basil, rosemary, and the like.

Plant extracts are extracts derived from plants, and more specifically mean substances obtained by subjecting a plant to an extraction treatment or processed products thereof. The plant extracts that can be used in the present invention are not particularly limited as to the plant from which they are derived as long as they have a methane emission suppressive action. Examples include plants of genus Allium such as garlic, onions, and leeks, plants of genus Cinnamon such as cinnamon, Ceylon cinnamon, and Chinese cinnamon, and plants of genus Citrus such as oranges, lemons, and citrus. The plant extracts that can be used in the present invention are not particularly limited as to the components thereof as long as they have a methane emission suppressive action. Examples of the components of the plant extracts that can be used in the present invention include aromatic compounds (e.g., aromatic aldehydes such as cinnamaldehyde), sulfur-containing compounds (e.g., allyl sulfides such as allicin, sulfur-containing amino acids such as alliin), and the like. The form of the plant extracts that can be used in the present invention is not particularly limited. For example, a liquid substance (extract) extracted from a plant may be used as is, or a plant-derived extract may be subjected to a dry treatment or the like and used as a powder or the like.

Halogenated methane analogues (HMAs) are halogen compounds included in the red algae Asparagopsis (Christoper R.K. Glasson et al., Algal Research 64 (2022) 102673). The halogenated methane analogues that can be used in the present invention are not particularly limited as long as they have a methane emission suppressive action. Examples include bromoform and dibromochloromethane. The form of the halogenated methane analogues that can be used in the present invention is not particularly limited. For example, red algae may be freeze-dried and used as a powder or the like.

Fatty acid calcium salt is a processed oil product obtained by processing (e.g., addition of calcium hydroxide) oils (e.g., palm oil, soybean oil, flaxseed oil, etc.) to protect them from rumen microorganisms, for the purpose of improving the utilization of lipid nutrients in ruminants. The components of the fatty acid calcium salt that can be used in the present invention are not particularly limited as long as they have a methane emission suppressive action. For example, the fatty acids contained in fatty acid calcium salt may be either saturated or unsaturated. Examples of saturated fatty acids include lauric acid, myristic acid, palmitic acid, stearic acid, and the like, and examples of unsaturated fatty acids include palmitoleic acid, oleic acid, linoleic acid, linolenic acid, and the like. From the viewpoint of the methane emission suppressive action, unsaturated fatty acids (e.g., oleic acid, linoleic acid, linolenic acid, etc.) are preferred.

Saponins are a type of glycoside found in plants and has a surfactant action. While the saponins that can be used in the present invention are not particularly limited as to the plant from which they are derived, as long as they have a methane emission suppressive action. Examples include soybeans, yellow astragalus, ginseng, olives, grape skins, and the like.

Organic acids are organic compounds that exhibit acidity. While the organic acids that can be used in the present invention are not particularly limited as long as they have a methane emission suppressive action. Examples include acetic acid, lactic acid, malic acid, succinic acid, fumaric acid and the like.

The methane emission inhibitors that can be used in the present invention are preferably organic compounds having a nitrooxy group (e.g., 3-nitrooxypropanol, etc.), cashew nut shell liquids, polyphenols (e.g., tannic acid, etc.), essential oils, plant extracts, halogenated methane analogues (e.g., bromoform, etc.), more preferably 3-nitrooxypropanol, cashew nut shell liquids, tannic acid, essential oils, plant extracts, and bromoform.

The method for producing the methane emission inhibitors that can be used in the present invention is not particularly limited and they may be produced by a method known per se or a method analogous thereto. Furthermore, commercially available products (products on the market) may also be used as methane emission inhibitors.

The amount of the methane emission inhibitor contained in the feedstuff of the present invention (i.e., the amount of methane emission inhibitor to be combined with rumen-protected amino acids in the feedstuff of the present invention) may be an amount effective for suppressing methane emission by ruminants. In other words, the feedstuff of the present invention may contain a methane emission inhibitor in an amount effective for suppressing methane emission by ruminants. Here, the "amount effective for suppressing methane emission by ruminants" refers to the amount that can produce a methane emission suppressive action in ruminants fed the feedstuff of the present invention (i.e., the amount that can reduce the amount of methane contained in the ruminant's belching). The amount effective for suppressing methane emission by ruminants may vary depending on the type of methane emission inhibitor, the type, body weight of ruminant fed the feedstuff of the present invention, and the like, and can be appropriately determined considering these factors.

The "rumen-protected amino acid" (RPAA), used in combination with the methane emission inhibitor in the present invention, refers to amino acids that have been treated or processed to reduce degradation in the rumen (the first stomach of ruminants), and is a concept that includes rumen bypass amino acids, rumen-protected amino acids, ruminant stomach-protected amino acids, and the like.

In the present specification, the "rumen-protected amino acid" is at times referred to as "RPAA". In addition, the "treatment or processing to reduce degradation in rumen" applied to the amino acids contained in RPAA is at times referred to as "rumen-protect treatment".

The type of amino acids contained in RPAA (i.e., amino acids that have undergone rumen-protect treatment) is not particularly limited, but it is preferable that it contains essential amino acids corresponding to the type of ruminant to which the feedstuff of the present invention is fed. Taking cattle, a type of ruminant, as an example, the essential amino acids for cattle are 10 types: arginine, histidine, isoleucine, leucine, lysine, methionine, phenylalanine, threonine, tryptophan, and valine. When the feedstuff of the present invention is fed to cattle, it is preferable that RPAA contains at least one of these 10 types. In particular, it is preferable that the RPAA contains, among the essential amino acids contained in the components other than RPAA in the feedstuff of the present invention, one having a relatively low sufficiency rate of the amino acid requirements of ruminants (limiting amino acid). Specifically, it is preferable that the RPAA contains lysine, methionine, arginine, histidine, more preferably lysine, methionine, particularly preferably lysine. The amino acids contained in the RPAA may be L-forms, D-forms, or DL-forms, preferably L-forms and DL-forms, more preferably L-forms. The form of the amino acids contained in the RPAA is not particularly limited and may be, for example, free form or salt form, or a form that can produce free amino acids through enzymatic reactions or hydrolysis in the body of a ruminant (e.g., constituent amino acids of peptides, constituent amino acids of proteins, etc.).

The RPAA used in the present invention can be obtained by subjecting amino acids (e.g., free amino acids, amino acids in salt form, amino acids in peptide form, amino acids in protein form, etc.) to a rumen-protect treatment (i.e., a treatment or processing to reduce degradation in the rumen). The rumen-protect treatment is not particularly limited as long as it can reduce the degradation of amino acids in the rumen, and may be performed by a method known per se or a method analogous thereto. For example, the method for preparing the RPAA used in the present invention may include coating amino acid particles with a protective agent mainly composed of hydrogenated oil, wax, etc., or granulating a mixture of the protective agent and amino acids. In one embodiment, the protective agent used in the preparation of RPAA may further contain, in addition to the aforementioned main component (hydrogenated oil, wax, etc.), for example, oils and fats other than hydrogenated oil, surfactants (e.g., lecithin, etc.), or the like.

In one embodiment, the RPAA used in the present invention may be prepared by a method described in WO 2008/041371, US-A-2009/232933, US-A-2013/095206, US Patent No. 9173420, US-A-2014/308418, US Patent No. 9241503, WO 2009/122750, US-A-2011/081444, US Patent No. 9204660, US-A-2014/308412, US Patent No. 9265273, WO 2018/030476, US-A-2019/166879, WO 2018/079748, US-A-2019/246666, US Patent No. 11076618, US-A-2021/321642, US Patent No. 11805793, WO 2018/079747, US-A-2019/246665, US Patent No. 11083209, WO 2019/189605, US-A-2021/007371, US Patent No. 11582988, US-A-2023/138420, WO 2021/060388, US-A-2022/211076, or the like, or a method analogous thereto. In one embodiment, the RPAA used in the present invention may be a feed additive composition (preferably a dispersed-type feed additive composition) containing (A) at least one selected from hydrogenated vegetable oil and hydrogenated animal oil having a melting point higher than 50°C and lower than 90°C, (B) lecithin (preferably 0.05 to 6% by weight of lecithin), (C) 40% to less than 65% by weight of basic amino acids (preferably lysine hydrochloride), and (D) water (preferably 0.01 to 6% by weight of water), as described in WO 2008/041371.

In one embodiment, the RPAA used in the present invention may be a commercially available product (products on the market). Examples of commercially available RPAAs include, but are not limited to, "AjiPro(registered trademark)-L," from Ajinomoto Co., Inc., "Smartamine M" and "Smartamine ML" from Adisseo, and "Mepron" from Evonik.

The form of the RPAA used in the present invention is not particularly limited and may be, for example, granule, powder, capsule, tablet, gel, solid, or the like.

The amount of RPAA contained in the feedstuff of the present invention (i.e., the amount of RPAA combined with the methane emission inhibitor in the feedstuff of the present invention) can be appropriately set in consideration of the type of amino acids contained in the RPAA, and type, use, breed, body weight, growth stage, age at calving, and the like of the ruminant to which the feedstuff of the present invention is fed. In one embodiment, if the amino acids contained in the RPAA include essential amino acids of the ruminant to which the feedstuff of the present invention is fed, the amount of RPAA contained in the feedstuff of the present invention may be set taking into consideration the essential amino acid requirements of the ruminant to which the feedstuff of the present invention is fed.

Hereinafter, the amount of RPAA contained in the feedstuff of the present invention is explained using the case where the ruminant to which the feedstuff of the present invention is fed is cattle, and the amino acids contained in the RPAA include essential amino acids of cattle, as an example. In this case, the amount of RPAA contained in the feedstuff of the present invention may be set such that the sufficiency rate of the feedstuff of the present invention relative to the essential amino acid requirements of cattle (required amount of essential amino acids contained in RPAA) is 80% or more (preferably 90-500%, more preferably 100-150%). In one embodiment, if the RPAA contained in the feedstuff of the present invention contains lysine, the amount of RPAA contained in the feedstuff of the present invention may be set such that the sufficiency rate of the feedstuff of the present invention relative to the lysine requirements of cattle is 80% or more (preferably 90-500%, more preferably 100-150%).

In the present invention, the nutrient requirements of ruminants (e.g., essential amino acid requirements, etc.) may be calculated based on, for example, feeding standards established and used in any country. In one embodiment, the essential amino acid requirements of cattle may be calculated based on Japanese feeding standard, an academic literature on cattle nutrition, or a feed design program. That is, in the example described above (where the ruminant fed the feedstuff of the present invention is cattle, and the amino acids contained in RPAA include essential amino acids for cattle), the amount of RPAA contained in the feedstuff of the present invention may be set such that the sufficiency rate of the feedstuff of the present invention relative to the essential amino acid requirements of cattle, based on Japanese feeding standard, an academic literature on cattle nutrition, or a feed design program, is the aforementioned specific proportion (generally 80% or more, preferably 90-500%, more preferably 100-150%).

Generally, nutrient requirements (e.g., requirements for metabolizable energy, metabolizable protein, metabolizable amino acids, etc.) are calculated based on national feeding standards, feed design programs, or the like, and a feedstuff is designed such that the sufficiency rate of the calculated nutrient requirements is about 100%. In feedstuff design, various feedstuff ingredients are used to satisfy the calculated nutrient requirements, and for example, RPAA may be used to satisfy the calculated requirements for metabolizable amino acids.

In the present specification, "Japanese Feeding Standard" refers to "Japanese Feeding Standard for Beef Cattle (2022)" and "Japanese Feeding Standard for Dairy Cattle (2017)" (both edited by the National Agriculture and Food Research Organization and published by the Japan Livestock Industry Association). Examples of academic literature on cattle nutrition include Nutrient Requirements of Dairy Cattle: Eighth Revised Edition (2021) (at times referred to as "NASEM" in the present specification) and the like, and examples of feedstuff design programs include AMTS (Agriculture Modeling and Training System, manufactured by AMTS), NDS (Nutritional Dynamic System, manufactured by RUM&N), CPM-Dairy (Cornell-Penn-Miner-Dairy), and the like. For calculating the lysine requirement and methionine requirement of beef cattle, "Japanese Feeding Standard for Beef Cattle (2022) - Feed Design Diagnostic Program (Amino Acid Balance Compatible)" (https://www.naro.go.jp/laboratory/nilgs/contents/shiryo_hyojyu n/nikuyou2022/download/index.html) may be used.

The feedstuff of the present invention may further contain other components in addition to the methane emission inhibitor and RPAA. The components other than the methane emission inhibitor and RPAA are not particularly limited as long as they do not impair the purpose of the present invention. Examples include feedstuff materials such as corn, corn silage, grass silage, alfalfa, alfalfa hay, timothy, Sudan grass, orchard grass, Italian ryegrass, Italian ryegrass silage, perennial ryegrass, sorghum, oat hay, barley, rye, rice bran, wheat bran, corn gluten feed, beet pulp, soybean meal, flaxseed meal, whole milk, sodium chloride, and the like; feedstuff additives such as antioxidants, fungicides, binders, emulsifiers, modifiers, amino acids not subjected to a rumen-protect treatment, vitamins, minerals, color enhancers, synthetic antibacterial agents, antibiotics, flavorings, tasters, enzymes, probiotics, organic acids, and the like; milking robot compound feed, PMR (partially mixed feed), and the like. Any one of these components may be used in combination with the methane emission inhibitor and RPAA, or two or more of these components may be used in combination with the methane emission inhibitor and RPAA.

The crude protein content of the feedstuff of the present invention may be set appropriately considering the type, use, breed, body weight, growth stage, age at calving, and the like of the ruminant to which the feedstuff of the present invention is fed, and it is preferable to set the content in consideration of the crude protein requirement of the ruminant to which the feedstuff of the present invention is fed. The crude protein requirement of a ruminant can be calculated based on feeding standards established and used in any country, academic literature on ruminant nutrition, or the like. For example, the crude protein requirement of cattle may be calculated based on Japanese feeding standard, NASEM, and the like. The crude protein content of the feedstuff of the present invention may be an amount in accordance with feeding standards established and used in any country (e.g., Japanese feeding standard, etc.) or academic literature on ruminant nutrition (e.g., NASEM, etc.). In one embodiment, it may be an amount less than the amount in accordance with such feeding standards or academic literature (e.g., an amount 1% DM or more less). Furthermore, if the crude protein content of the feedstuff of the present invention is set to an amount lower (e.g., 1% or more less) than the amount in accordance with feeding standards established and used in any country or in academic literature on ruminant nutrition, the sufficiency rate of the feedstuff of the present invention with respect to the essential amino acid requirements of ruminants, which has decreased thereby, can be compensated for by adjusting the amount of RPAA contained in the feedstuff of the present invention.

Hereinafter, the crude protein content of the feedstuff of the present invention is specifically explained using the case where the ruminant to which the feedstuff of the present invention is fed is cattle (beef cattle, dairy cow), as an example. For example, when the feedstuff of the present invention is fed to a dairy cow in a lactation period, the crude protein content thereof is preferably 14 to 20% DM, more preferably 15 to 18% DM, further preferably 15 to 16% DM, relative to the feedstuff (dry matter) of the present invention. In the present specification, "%DM" means the proportion relative to the weight of dry matter (DM).

In addition, when the feedstuff of the present invention is fed to a dairy cow during the dry period, the crude protein content thereof is preferably 10 to 16% DM, more preferably 12 to 14% DM, relative to the feedstuff (dry matter) of the present invention.

In addition, when the feedstuff of the present invention is fed to beef cattle, the crude protein content thereof is preferably 10 to 17% DM relative to the feedstuff (dry matter) of the present invention. For example, when the feedstuff of the present invention is fed to beef cattle weighing less than 400 kg, the crude protein content thereof is preferably 12 to 17% DM relative to the feedstuff (dry matter) of the present invention. When the feedstuff of the present invention is fed to beef cattle weighing 400 kg or more, the crude protein content thereof is preferably 11 to 13% DM relative to the feedstuff (dry matter) of the feedstuff of the present invention.

Alternatively, the crude protein content of the feedstuff of the present invention may be 0.1 to 10% DM lower than the crude protein content of the feedstuff used up to the start of feeding the feedstuff of the present invention (e.g., until the day before the start of feeding the feedstuff of the present invention) (hereinafter at times referred to as "pre-feedstuff"). The feeding period of the pre-feedstuff is not particularly limited and may be, for example, one year or more, one year, six months, three months, one month, one week, or the like. Furthermore, the crude protein content of the feedstuff of the present invention may be 0.2 to 7.5% DM lower than the crude protein content of the pre-feedstuff, 0.5 to 5% DM lower than the crude protein content of the pre-feedstuff, or 1 to 3% DM lower than the crude protein content of the pre-feedstuff.

Alternatively, the J-Credit (https://japancredit.go.jp) methodology in agriculture, "Feeding of Cattle, Pigs, and Broilers with Amino Acid-Balanced Feed" (Methodology Number: AG-001), stipulates that, as an application condition, conventional feedstuff should be provided before project implementation, and after project implementation, an amino acid-balanced feedstuff with a CP content (%) lowered by 1-3% DM from the CP content (%) of the conventional feedstuff should be provided. The crude protein content of the feedstuff of the present invention may be set in accordance therewith.

In the present invention, the crude protein content of the feedstuff is measured and calculated by component measurement using near-infrared spectroscopy (NIR) or wet chemical analysis.

The rumen degradable protein (RDP) content of the feedstuff of the present invention may be set appropriately considering the type, use, breed, body weight, growth stage, age at calving, and the like of the ruminant to which the feedstuff of the present invention is fed. In one embodiment, the content may be an amount in accordance with feeding standards established and used in any country (e.g., Japanese feeding standard, etc.) or academic literature on ruminant nutrition (e.g., NASEM, etc.). As used herein, the "rumen-degradable protein" refers to the protein in the feed that is degraded and utilized by microorganisms in the rumen. In the present specification, the rumen-degradable protein content is at times referred to as "RDP content".

Hereinafter, the RDP content of the feedstuff of the present invention is specifically explained using the case where the ruminant to which the feedstuff of the present invention is fed is cattle (beef cattle, dairy cow), as an example. For example, when the feedstuff of the present invention is fed to dairy cow, the RDP content thereof is preferably 8% DM or more, more preferably 8.8% DM or more, further preferably 9% DM or more, relative to the feedstuff (dry matter) of the present invention.

In addition, when the feedstuff of the present invention is fed to beef cattle, the RDP content thereof is preferably 6% DM or more, more preferably 7% DM or more, further preferably 8% DM or more, relative to the feedstuff (dry matter) of the present invention.

In the present invention, the RDP content of the feedstuff (i.e., rumen-degradable protein content) can be determined by calculating the component value based on a feed design program (e.g., AMTS, NDS, CPM Daily, etc.) or a feedstuff composition table listed in NASEM, etc.

In one embodiment, the content of metabolizable protein from bacterial protein (MP from Bact.) in the feedstuff of the present invention may be an amount in accordance with feeding standards established and used in any country (e.g., Japanese feeding standard, etc.) or academic literature on ruminant nutrition (e.g., NASEM, etc.). It is desirable that the content of metabolizable protein from bacterial protein in the feedstuff of the present invention is not lower than that of the feedstuff used up to the start of feeding the feedstuff of the present invention. In the present specification, the content of metabolizable protein from bacterial protein is at times referred to as "MP content from BP".

In the present invention, the MP content from BP of the feedstuff (i.e., the content of metabolizable protein from bacterial protein) can be determined by calculating the component value based on a feed design program (e.g., AMTS, NDS, CPM Daily, etc.) or a feedstuff composition table listed in NASEM, etc.

The method for producing the feedstuff of the present invention is not particularly limited, and the feedstuff of the present invention can be produced by a method known per se or a method analogous thereto.

The form of the feedstuff of the present invention is not particularly limited, and when fed to ruminants, a methane emission inhibitor and RPAA can be combined. In one embodiment, the feedstuff of the present invention may be a single feedstuff containing a methane emission inhibitor and RPAA. In addition, the feedstuff of the present invention may be, for example, a combination of a feedstuff containing RPAA and a separately formulated methane emission inhibitor. In this case, the feedstuff containing RPAA and the methane emission inhibitor may be fed to ruminants simultaneously, or they may be fed to ruminants with a time difference (for example, the feedstuff containing RPAA followed by the methane emission inhibitor, or vice versa).

The method of feeding the feedstuff of the present invention to ruminants is not particularly limited and may be done by a method known per se or a method analogous thereto.

The type of feedstuff animals that can be fed the feedstuff of the present invention is not particularly limited, and cattle are preferred.

The use of the feedstuff animals that can be fed the feedstuff of the present invention is not particularly limited. When the feedstuff of the present invention is fed to cattle as one embodiment (cattle feedstuff), the cattle that can be fed the feedstuff of the present invention may be either beef cattle or dairy cow.

The breeds of feedstuff animals that can be fed the feedstuff of the present invention are not particularly limited. When the feedstuff of the present invention is, in one embodiment, fed to dairy cows (feedstuff for dairy cow), examples of the breeds of the dairy cow that can be fed the feedstuff of the present invention include Holstein, Jersey, Brown Swiss, and the like, and the feedstuff can be fed to any of these. In this case, the age at calving of the dairy cow is also not particularly limited, and the dairy cow that can be fed the feedstuff of the present invention may be in any of the early lactation period, late lactation period, dry period, and the like.

The feeding period of the feedstuff of the present invention is not particularly limited, and is generally one week or more, preferably four weeks or more. The number of feedings per day is also not particularly limited, and may be, for example, once or more, or the feeding mode of the feedstuff of the present invention may be continuous feeding.

The feedstuff of the present invention can suppress methane emission by ruminants. The feedstuff of the present invention can suppress methane emission by ruminants more than the methane emission inhibitor contained in the feedstuff of the present invention. The method for evaluating the suppressive action of the feedstuff of the present invention on the methane emission by ruminants is not particularly limited and may be evaluated by a method known per se or a method analogous thereto. For example, as in the examples described later, evaluation can be performed by conducting a culture test using, as a sample, rumen fluid (gastric juice) collected from ruminants fed the feedstuff of the present invention, and measuring the amount of gas (methane, etc.) generated from the rumen fluid. The amount of gas generated can be measured by a method known per se (e.g., gas chromatography, high-performance liquid chromatography, etc.) or a method analogous thereto.

In one embodiment, the feedstuff of the present invention may have a higher action to increase the propionic acid concentration in the rumen of ruminants compared to the methane emission inhibitor contained in the feedstuff of the present invention. Methane production in the rumen of ruminants can be suppressed by preventing the hydrogen generated in the rumen from being used for methane synthesis. Since hydrogen is utilized when propionic acid is produced in the rumen, the amount of hydrogen available for methane synthesis can be reduced by promoting propionic acid production and increasing the propionic acid concentration in the rumen. As a result, methane production in the rumen is suppressed, and methane emission by ruminants can be suppressed. The method for evaluating the action of the feedstuff of the present invention and methane emission inhibitor to increase the propionic acid concentration in the rumen of ruminants is not particularly limited and may be evaluated by a method known per se or a method analogous thereto. For example, as in the examples described later, evaluation can be performed by conducting a culture test using, as a sample, rumen fluid (gastric juice) collected from ruminants fed the feedstuff of the present invention and the like, and measuring the amount of gas (propionic acid, etc.) generated from the rumen fluid. The amount of gas generated can be measured by a method known per se (e.g., gas chromatography, high-performance liquid chromatography, etc.) or a method analogous thereto.

In one embodiment, the feedstuff of the present invention may have a higher action to increase the butyric acid concentration in the rumen of ruminants or decrease the acetic acid concentration in the rumen of ruminants, compared to the methane emission inhibitor contained in the feedstuff of the present invention.

Methane production in the rumen of ruminants can be suppressed, as mentioned above, by preventing the hydrogen generated in the rumen from being used for methane synthesis. Since hydrogen is utilized when butyric acid is produced in the rumen, the amount of hydrogen available for methane synthesis can be reduced by promoting butyric acid production and increasing the butyric acid concentration in the rumen. As a result, methane production in the rumen is suppressed, and methane emission by ruminants can be suppressed.

In addition, since hydrogen is produced when acetic acid is produced in the rumen, the amount of hydrogen available for methane synthesis can be reduced by suppressing acetic acid production and lowering the acetic acid concentration in the rumen.

The method for evaluating the action of the feedstuff of the present invention and methane emission inhibitor to increase the butyric acid concentration and decrease the acetic acid concentration in the rumen of ruminants is not particularly limited and may be evaluated by a method known per se or a method analogous thereto. For example, as in the examples described later, evaluation can be performed by conducting a culture test using, as a sample, rumen fluid (gastric juice) collected from ruminants fed the feedstuff of the present invention and the like, and measuring the amount of gas (butyric acid, acetic acid, etc.) generated from the rumen fluid. The amount of gas generated can be measured by a method known per se (e.g., gas chromatography, high-performance liquid chromatography, etc.) or a method analogous thereto.

In one embodiment, the feedstuff of the present invention may have a high action of increasing the proportion of Selenomonadaceae family bacteria in the bacteria constituting the rumen microbiota of ruminants, compared to the methane emission inhibitor contained in the feedstuff of the present invention. Selenomonadaceae family bacteria are involved in propionic acid production in the rumen of ruminants, and the microbiota can be altered to promote propionic acid production by increasing the proportion of Selenomonadaceae family bacteria in the bacteria constituting the rumen microbiota. Such alteration of the rumen microbiota reduces the amount of hydrogen available for methane synthesis, thereby suppressing methane production in the rumen and reducing methane emissions by ruminants. The method for evaluating the action of the feedstuff of the present invention and methane emission inhibitor to increase the proportion of Selenomonadaceae family bacteria in the bacteria constituting the rumen microbiota of ruminants is not particularly limited, and a method known per se or a method analogous thereto may be used for the evaluation. For example, as shown in the below-mentioned Examples, it can be evaluated by performing a culture test using rumen fluid (gastric juice) collected from ruminants fed the feedstuff of the present invention and the like as a starter culture, and analyzing the microbiota of the rumen fluid. The analysis of the microbiota (measurement of bacterial count, etc.) can be performed using a method known per se (e.g., quantitative PCR method, amplicon sequencing method, etc.) or a method analogous thereto.

As a bacterium that can exert an action similar to that of the aforementioned Selenomonadaceae family bacteria, there are Prevotellaceae family bacteria and Bacteroidales RF-16 group family bacteria belonging to the phylum Bacteroidota, Succinivibrionaceae family bacteria belonging to the phylum Proteobacteria, Ruminococcaceae family bacteria belonging to the phylum Firmicutes, and Fibrobacteraceae family bacteria belonging to the phylum Fibrobacterota. By increasing the proportion of at least one selected from the group consisting of Bacteroidota phylum bacteria (e.g., Prevotellaceae family bacteria, Bacteroidales RF-16 group family bacteria, etc.), Proteobacteria phylum bacteria (e.g., Succinivibrionaceae family bacteria, etc.), Firmicutes phylum bacteria (e.g., Ruminococcaceae family bacteria, etc.), and Fibrobacterota phylum bacteria (e.g., Fibrobacteraceae family bacteria, etc.), in the bacteria constituting the rumen microbiota, the microbiota can be altered to promote propionic acid production. Such alteration of the rumen microbiota reduces the amount of hydrogen available for methane synthesis, thereby suppressing methane production in the rumen and reducing methane emissions by ruminants, as described above.

In one embodiment, the feedstuff of the present invention may have a high action of increasing the proportion of Lachnospiraceae family bacteria of the phylum Firmicutes in the bacteria constituting the rumen microbiota of ruminants, compared to the methane emission inhibitor contained in the feedstuff of the present invention. Lachnospiraceae family bacteria are involved in butyric acid production in the rumen of ruminants, and the microbiota can be altered to promote butyric acid production by increasing the proportion of Lachnospiraceae family bacteria in the bacteria constituting the rumen microbiota. Such alteration of the rumen microbiota reduces the amount of hydrogen available for methane synthesis, thereby suppressing methane production in the rumen and reducing methane emissions by ruminants. The method for evaluating the action of the feedstuff of the present invention and methane emission inhibitor to increase the proportion of Lachnospiraceae family bacteria in the bacteria constituting the rumen microbiota of ruminants is not particularly limited, and a method known per se or a method analogous thereto may be used for the evaluation. For example, as shown in the below-mentioned Examples, it can be evaluated by performing a culture test using rumen fluid (gastric juice) collected from ruminants fed the feedstuff of the present invention and the like as a starter culture, and analyzing the microbiota of the rumen fluid. The analysis of the microbiota (measurement of bacterial count, etc.) can be performed using a method known per se (e.g., quantitative PCR method, amplicon sequencing method, etc.) or a method analogous thereto.

As a bacterium that can exert an action similar to that of the aforementioned Lachnospiraceae family bacteria, there are Prevotellaceae family bacteria and Bacteroidales RF-16 group family bacteria belonging the phylum Bacteroidota, Succinivibrionaceae family bacteria belonging the phylum Proteobacteria, Ruminococcaceae family bacteria belonging the phylum Firmicutes, and Fibrobacteraceae family bacteria belonging the phylum Fibrobacterota. By increasing the proportion of at least one selected from the group consisting of Bacteroidota phylum bacteria (e.g., Prevotellaceae family bacteria, Bacteroidales RF-16 group family bacteria, etc.), Proteobacteria phylum bacteria (e.g., Succinivibrionaceae family bacteria, etc.), Firmicutes phylum bacteria (e.g., Ruminococcaceae family bacteria, etc.), and Fibrobacterota phylum bacteria (e.g., Fibrobacteraceae family bacteria, etc.), in the bacteria constituting the rumen microbiota, the microbiota can be altered to promote butyric acid production. Such alteration of the rumen microbiota reduces the amount of hydrogen available for methane synthesis, thereby suppressing methane production in the rumen and reducing methane emissions by ruminants, as described above.

In one embodiment, the feedstuff of the present invention may have a high action of increasing the proportion of at least one selected from the group consisting of Bacteroidota phylum bacteria (e.g., Prevotellaceae family bacteria, Bacteroidales RF-16 group family bacteria, etc.), Proteobacteria phylum bacteria (e.g., Succinivibrionaceae family bacteria, etc.), Firmicutes phylum bacteria (e.g., Ruminococcaceae family bacteria, etc.), and Fibrobacterota phylum bacteria (e.g., Fibrobacteraceae family bacteria, etc.), in the bacteria constituting the rumen microbiota of ruminants, compared to the methane emission inhibitor contained in the feedstuff of the present invention.

The method for evaluating the action of the feedstuff of the present invention and methane emission inhibitor to increase the proportion of at least one selected from the group consisting of Bacteroidota phylum bacteria (e.g., Prevotellaceae family bacteria, Bacteroidales RF-16 group family bacteria, etc.), Proteobacteria phylum bacteria (e.g., Succinivibrionaceae family bacteria, etc.), Firmicutes phylum bacteria (e.g., Ruminococcaceae family bacteria, etc.), and Fibrobacterota phylum bacteria (e.g., Fibrobacteraceae family bacteria, etc.), in the bacteria constituting the rumen microbiota of ruminants is not particularly limited, and a method known per se or a method analogous thereto may be used for the evaluation. For example, as shown in the below-mentioned Examples, it can be evaluated by performing a culture test using rumen fluid (gastric juice) collected from ruminants fed the feedstuff of the present invention and the like as a starter culture, and analyzing the microbiota of the rumen fluid. The analysis of the microbiota (measurement of bacterial count, etc.) can be performed using a method known per se (e.g., quantitative PCR method, amplicon sequencing method, etc.) or a method analogous thereto.

The present invention also provides a method for raising ruminants (at times referred to as "the raising method of the present invention" in the present specification). The raising method of the present invention is characterized by feeding the feedstuff of the present invention to ruminants. The raising method of the present invention is not particularly limited except that it includes feeding the feedstuff of the present invention to ruminants, and may further include other steps (e.g., general ruminant raising steps, etc.) as long as the purpose of the present invention is not impaired. The raising method of the present invention allows for the raising of ruminants while suppressing methane emission.

The present invention also provides a method for suppressing methane emission by ruminants (at times referred to as "the suppression method of the present invention" in the present specification). The suppression method of the present invention is characterized by feeding the feedstuff of the present invention to ruminants. The suppression method of the present invention is not particularly limited except that it includes feeding the feedstuff of the present invention to ruminants, and may further include other steps as long as the purpose of the present invention is not impaired. For example, other methane emission suppression methods different from the suppression method of the present invention may be performed in combination.

The present invention also provides a method for improving the effect of a methane emission inhibitor (at times referred to as "the improvement method of the present invention" in the present specification). The improvement method of the present invention may include adding RPAA to the feedstuff for ruminants (i.e., the feedstuff fed to ruminants) that supplies the methane emission inhibitor.

The RPAA (i.e., rumen-protected amino acids) that can be used in the improvement method of the present invention may be the same as those contained in the feedstuff of the present invention described above, and the preferred embodiments are also the same. Furthermore, the methane emission inhibitor to which the improvement method of the present invention can be applied (i.e., a methane emission inhibitor whose effect can be improved by the improvement method of the present invention) may be the same as the one contained in the aforementioned feedstuff of the present invention, and the preferred embodiments are also the same.

The amount of RPAA that can be used in the improvement method of the present invention (i.e., the amount of RPAA added to the feedstuff) can be appropriately set in consideration of the type of amino acids contained in the RPAA, and type, use, breed, body weight, growth stage, age at calving, and the like of the ruminant to which the methane emission inhibitor is supplied. In one embodiment, if the amino acids contained in the RPAA include essential amino acids of the ruminant to which the methane emission inhibitor is supplied, the amount of RPAA that can be used in the improvement method of the present invention may be set in consideration of the essential amino acid requirements of the ruminant to which the methane emission inhibitor is supplied.

Hereinafter, the amount of RPAA that can be used in the improvement method of the present invention is explained using the case where the ruminant to which the methane emission inhibitor is supplied is cattle, and the amino acids contained in the RPAA include essential amino acids of cattle, as an example. In this case, the amount of RPAA that can be used in the improvement method of the present invention may be set such that the sufficiency rate of the feedstuff (feedstuff to which RPAA is added) relative to the essential amino acid requirements of cattle (required amount of essential amino acids contained in RPAA) is 80% or more (preferably 90-500%, more preferably 100-150%). In one embodiment, if the RPAA that can be used in the improvement method of the present invention contains lysine, the amount of RPAA that can be used in the improvement method of the present invention may be set such that the sufficiency rate of the feedstuff of the present invention relative to the lysine requirements of cattle is 80% or more (preferably 90-500%, more preferably 100-150%). Furthermore, as described later, if the improvement method of the present invention includes adjusting to reduce the crude protein content of the feedstuff for ruminants, to which a methane emission inhibitor is supplied, the amount of RPAA that can be used in the improvement method of the present invention may be set such that the sufficiency rate of the feedstuff relative to the essential amino acid requirements of the ruminants, which has decreased due to the adjustment, is compensated for. In other words, if the improvement method of the present invention includes adjusting to reduce the crude protein content of the feedstuff for ruminants, to which a methane emission inhibitor is supplied, the amount of RPAA that can be used in the improvement method of the present invention may be an amount that maintains the sufficiency rate of the essential amino acid requirements (e.g., lysine requirements, etc.) before the adjustment of the crude protein content.

The improvement method of the present invention may include adjusting to reduce the crude protein content of the feedstuff for ruminants to which a methane emission inhibitor is supplied. The crude protein content may be reduced by 0.1 to 10% DM, 0.2 to 7.5% DM, 0.5 to 5% DM, or 1 to 3% DM. The improvement method of the present invention may include adjusting the crude protein content of the feedstuff for ruminants, to which a methane emission inhibitor is supplied, in the same manner as in the aforementioned crude protein content of the feedstuff of the present invention.

The improvement method of the present invention may include adjusting the RDP content (i.e., rumen-degradable protein content) and MP content from BP (i.e., content of metabolizable proteins from bacterial proteins) of the feedstuff for ruminants, to which a methane emission inhibitor is supplied, respectively in the same manner as in the aforementioned RDP content and MP content from BP of the feedstuff of the present invention.

According to the improvement method of the present invention, the effect of the methane emission inhibitor can be improved. For example, the improvement method of the present invention can improve the suppressive action on the methane emission by ruminants (e.g., cattle, etc.). Furthermore, the improvement method of the present invention can improve the action of increasing the propionic acid concentration in the rumen of ruminants (e.g., cattle, etc.) and the action of increasing the proportion of Selenomonadaceae family bacteria in the bacteria constituting the rumen microbiota of ruminants (e.g., cattle, etc.). The method for evaluating these effects is not particularly limited and may be evaluated by a method known per se or a method analogous thereto. For example, it may be evaluated by the same method as the aforementioned feedstuff of the present invention.

The improvement method of the present invention can improve the action of increasing the butyric acid concentration in the rumen of ruminants (e.g., cattle, etc.), the action of decreasing the acetic acid concentration in the rumen of ruminants (e.g., cattle, etc.), and the action of increasing the proportion of Lachnospiraceae family bacteria in the bacteria constituting the rumen microbiota of ruminants (e.g., cattle, etc.). In addition, the improvement method of the present invention can improve the action of increasing the proportion of at least one selected from the group consisting of Bacteroidota phylum bacteria (e.g., Prevotellaceae family bacteria, Bacteroidales RF-16 group family bacteria, etc.), Proteobacteria phylum bacteria (e.g., Succinivibrionaceae family bacteria, etc.), Firmicutes phylum bacteria (e.g., Ruminococcaceae family bacteria, etc.), and Fibrobacterota phylum bacteria (e.g., Fibrobacteraceae family bacteria, etc.) in the bacteria constituting the rumen microbiota of ruminants (e.g., cattle, etc.). The method for evaluating these effects is not particularly limited and may be evaluated by a method known per se or a method analogous thereto. For example, the effects may be evaluated by the same method as that used for the aforementioned feedstuff of the present invention.

The present invention is described in more detail in the following examples; however, the present invention is not limited in any way by these examples.

In the present specification, each "%" means "wt%", unless otherwise specified.

### [Example]

The 3-nitrooxypropanol reagent used in the following Experimental Examples is manufactured by MedChemExpress USA, and the reagents of tannic acid, sodium nitrate, and bromoform are all manufactured by FUJIFILM Wako Pure Chemical Corporation.

### <Experimental Example 1>

### feeding test

Four Holstein cows (dry cows, average weight 815±36 kg) were divided into two groups of two cows each. Each group was fed either a low-protein feedstuff (Feed A) including a cattle preparation containing rumen-protected lysine ("AjiPro(registered trademark)-L", manufactured by Ajinomoto Co., Inc.) or a control feedstuff (Feed C) daily for three weeks. Gastric juice was orally collected from the four cows after three weeks of feeding. After collecting the gastric juice, the feedstuffs given to the two groups were swapped, and the cows were fed daily again for three weeks. Gastric juice was again orally collected from the four cows after three weeks of feeding. The collected gastric juice was used in the culture test described later.

The feedstuff compositions of Feed A and Feed C are shown in Table 1. The component values of Feed A and Feed C are shown in Table 2. The component values shown in Table 2 were obtained by accumulating, according to the composition shown in Table 1, the component values obtained by measuring the components of each feedstuff ingredients by near-infrared spectroscopy (NIR) or wet chemical analysis, or the component values calculated based on the feed component table included in the feed design software AMTS. The energy content of Feed A and Feed C was adjusted to about 1.3 times the recommended value of the Japanese Feeding Standard (calculated assuming a cow body weight of 800 kg). The crude protein content of Feed A ("CP" in Table 2) was about 4% DM lower than that of Feed C. Feed A was supplemented with a cattle preparation containing rumen-protected lysine (AjiPro(registered trademark)-L) so that the sufficiency rate for lysine requirements was similar to that of Feed C (Feed A and Feed C both exceeded 100% in sufficiency rate for lysine requirements of cattle).

**[Table 1]**

| feedstuff composition (%DM) | Feed A | Feed C |
|---|---|---|
| Oat Hay | 31 | 31 |
| Alfalfa Cube | 21 | 21 |
| Soybean Meal | 0 | 10 |
| Corn Grain Ground | 19 | 16 |
| Wheat Bran | 16 | 8 |
| Beet Pulp | 12 | 12 |
| AjiPro^{®}-L | 0.22 | 0 |
| Minerals and Vitamins | 1.12 | 1.12 |
| total | 100 | 100 |

**[Table 2]**

| feedstuff component value | Feed A | Feed C |
|---|---|---|
| CP (%DM) | 12.4 | 16.4 |
| RDP (%DM) | 9.4 | 12.6 |
| ME (Mcal) | 23.5 | 23.4 |
| MP (g) | 900 | 968 |
| MP from Bact (g) | 704 | 694 |
| MP from RUP (g) | 196 | 274 |
| aNDFom (%DM) | 37.8 | 36.0 |
| Sugar (%DM) | 7.8 | 8.6 |
| Starch (%DM) | 17.2 | 13.7 |
| Met (g) | 21.9 | 22.7 |
| Lys (g) | 70.4 | 70.4 |

Each component value described in Table 2 means the following.
·CP; Crude Protein
·RDP; Rumen Degradable Protein
·ME; metabolizable energy
·MP; metabolizable protein
·MP from Bact; Metabolizable Protein from Bacterial Protein
·MP from RUP; Metabolizable Protein from Rumen Undegradable Protein
·aNDFom; heat resistant α-amylase treated neutral detergent fiber (amylase Neutral Detergent Fiber organic matter)
·Met; Methionine
·Lys; Lysine

Here, ME, MP, MP from Bact, MP from RUP, Met, and Lys are the amounts per 9.6 kg of feedstuff (about daily intake (dry matter) of a cow).

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 3 were added. The methane emission inhibitors were added in amounts corresponding to the concentrations shown in Table 3 relative to the substrate. The vials containing the substrate and each methane emission inhibitor, and vials without these additives were sealed and placed in an incubator, and anaerobic culture was performed at 39°C for 24 hr with shaking. Six hours and 24 hours after completion of culture, the gas generated in the vials was collected using a syringe and combined, and the total amount of gas generated and the amount of propionic acid generated were measured. The total amount of gas generated was measured using a gas chromatograph, and the amount of propionic acid generated was measured using a high-performance liquid chromatograph (HPLC). The measurement results are shown in Table 4. In Table 4, the amount of propionic acid generated is shown as a relative amount of propionic acid generated where the amount of propionic acid generated in a sample with the same feedstuff and no addition of methane emission inhibitor is 100%.

**[Table 3]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Essential Oil | Essential Oil preparation ("AGOLIN RUMINANT", Alltech) | 0.1% |
| | | 20% |
| Tannic Acid | reagent | 20% |
| 3-nitrooxypropanol (3-NOP) | reagent | 0.12% |
| Plant Extract | Plant Extract preparation ("Allin Plus", Orffa) | 1% |

**[Table 4]**

| relative amount of propionic acid generated (unit: %) | | |
|---|---|---|
| | Feed C | Feed A |
| methane emission inhibitor no addition | 100 | 100 |
| CNSL-blended feedstuff (5%) | 114 | 134 |
| Essential Oil (0.1%) | 100 | 115 |
| Essential Oil (20%) | 102 | 130 |
| Tannic Acid (20%) | 91 | 117 |
| 3-NOP (0.12%) | 96 | 133 |
| Plant Extract (1%) | 97 | 113 |

As shown in Table 4, compared to the sample of gastric juice collected from the cows fed Feed C and supplemented with a methane emission inhibitor (cashew nut shell liquid, essential oil, tannic acid, 3-nitrooxypropanol, plant extract), the amount of propionic acid produced was higher in the sample of gastric juice collected from the cows fed Feed A and supplemented with the same methane emission inhibitor.

### <Experimental Example 2>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 5 were added. The methane emission inhibitors were added in amounts corresponding to the concentrations shown in Table 5 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was carried out using amplicon sequencing method targeting the bacterial 16S ribosomal RNA gene. From the obtained analysis results, the amount of Selenomonadaceae family bacteria (proportion of Selenomonadaceae family bacteria in the bacteria constituting the microbiota) was calculated. The results are shown in Table 6. In Table 6, the amount of Selenomonadaceae family bacteria is shown as a relative amount of Selenomonadaceae family bacteria where the amount of Selenomonadaceae family bacteria in a sample with the same feedstuff and no addition of methane emission inhibitor is 100%.

**[Table 5]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Essential Oil | Essential Oil preparation ("AGOLIN RUMINANT", Alltech) | 0.1% |
| 3-nitrooxypropanol (3-NOP) | reagent | 0.12% |
| Plant Extract | Plant Extract preparation ("Alliin Plus", Orffa) | 20% |
| sodium nitrate (NaNO₃) | reagent (NaNO₃+cystine) | 18% |

**[Table 6]**

| relative amount of Selenomonadaceae family bacteria (unit: %) | | |
|---|---|---|
| | Feed C | Feed A |
| no addition of methane emission inhibitor | 100 | 100 |
| CNSL-blended feedstuff (5%) | 256 | 284 |
| Essential Oil (0.1%) | 71 | 97 |
| 3-NOP (0.12%) | 150 | 175 |
| Plant Extract (20%) | 164 | 216 |
| NaNO₃ (18%) | 290 | 297 |

As shown in Table 6, compared to the sample of gastric juice collected from the cows fed Feed C and supplemented with a methane emission inhibitor (cashew nut shell liquid, essential oil, 3-nitrooxypropanol, plant extract, sodium nitrate), the relative bacterial count of Selenomonadaceae family bacteria was higher in the sample of gastric juice collected from the cows fed Feed A and supplemented with the same methane emission inhibitor.

### <Experimental Example 3>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 7 were added. The methane emission inhibitors were added in amounts corresponding to the concentrations shown in Table 7 relative to the substrate. The vials containing the substrate and each methane emission inhibitor, and vials without these additives were sealed and placed in an incubator, and anaerobic culture was performed at 39°C for 24 hr with shaking. Six hours and 24 hours after completion of culture, the gas generated in the vials was measured and collected using a syringe, and the amount of methane generated was measured using a gas chromatograph. The measurement results are shown in Table 8. The amount of methane generated shown in Table 8 is the total amount of methane produced during 6 hr of cultivation and the amount of methane produced during the subsequent 18 hr of cultivation. In Table 8, the amount of methane generated is shown as a relative amount of methane generated where the amount of methane generated in a sample with no addition of methane emission inhibitor is 100%.

**[Table 7]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 20% |
| Essential Oil | Essential Oil preparation ("AGOLIN RUMINANT", Alltech) | 0.1% |
| Tannic Acid | reagent | 6% |
| 3-nitrooxypropanol (3-NOP) | reagent | 0.12% |
| Plant Extract | Plant Extract preparation ("Allin Plus", Orffa) | 20% |

**[Table 8]**

| relative amount of methane generated (unit: %) | | |
|---|---|---|
| | Feed C | Feed A |
| no addition of methane emission inhibitor | 100 | 100 |
| CNSL-blended feedstuff (20%) | 67 | 63 |
| Essential Oil (0.1%) | 102 | 92 |
| Tannic Acid (6%) | 91 | 84 |
| 3-NOP (0.12%) | 37 | 17 |
| Plant Extract (20%) | 99 | 96 |

As shown in Table 8, compared to the sample of gastric juice collected from the cows fed Feed C and supplemented with a methane emission inhibitor (cashew nut shell liquid, essential oil, tannic acid, 3-nitrooxypropanol, plant extract), the amount of methane generated was lower in the sample of gastric juice collected from the cows fed Feed A and supplemented with the same methane emission inhibitor. In the sample of gastric juice collected from the cows fed Feed A and supplemented with a methane emission inhibitor, methane production was synergistically suppressed.

### <Experimental Example 4>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 9 were added. The methane emission inhibitors were added in amounts corresponding to the concentrations shown in Table 9 relative to the substrate. The vials containing the substrate and each methane emission inhibitor, and vials without these additives were sealed and placed in an incubator, and anaerobic culture was performed at 39°C for 24 hr with shaking. Six hours and 24 hours after completion of culture, the gas generated in the vials was collected using a syringe and combined, and the total amount of gas generated and the amount of butyric acid generated were measured. The total amount of gas generated was measured using a gas chromatograph, and the amount of butyric acid generated was measured using a high-performance liquid chromatograph (HPLC). The measurement results are shown in Table 10. In Table 10, the amount of butyric acid generated is shown as a relative amount of butyric acid generated where the amount of butyric acid generated in a sample with no addition of methane emission inhibitor is 100%.

**[Table 9]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| | | 20% |
| Essential Oil | Essential Oil preparation ("AGOLIN RUMINANT", Alltech) | 0.1% |
| | | 20% |
| Tannic Acid | reagent | 6% |
| | | 20% |
| 3-nitrooxypropanol (3-NOP) | reagent | 0.12% |
| sodium nitrate (NaNO₃) | reagent (NaNO₃+cystine) | 18% |
| Plant Extract | Plant Extract preparation ("Allin Plus", Orffa) | 1% |

**[Table 10]**

| relative amount of butyric acid generated (unit: %) | | |
|---|---|---|
| | Feed C | Feed A |
| no addition of methane emission inhibitor | 100 | 100 |
| CNSL-blended feedstuff (5%) | 106 | 110 |
| CNSL-blended feedstuff (20%) | 73 | 77 |
| Essential Oil (0.1%) | 104 | 107 |
| Essential Oil (20%) | 110 | 121 |
| Tannic Acid (6%) | 86 | 101 |
| Tannic Acid (20%) | 64 | 80 |
| 3-NOP (0.12%) | 96 | 143 |
| NaNO₃ (18%) | 52 | 68 |
| Plant Extract (1%) | 99 | 114 |

As shown in Table 10, compared to the sample of gastric juice collected from the cows fed Feed C and supplemented with a methane emission inhibitor (cashew nut shell liquid, essential oil, tannic acid, 3-nitrooxypropanol, sodium nitrate, plant extract), the amount of butyric acid generated was higher in the sample of gastric juice collected from the cows fed Feed A and supplemented with the same methane emission inhibitor.

### <Experimental Example 5>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 11 were added. The methane emission inhibitors were added in amounts corresponding to the concentrations shown in Table 11 relative to the substrate. The vials containing the substrate and each methane emission inhibitor, and vials without these additives were sealed and placed in an incubator, and anaerobic culture was performed at 39°C for 24 hr with shaking. Six hours and 24 hours after completion of culture, the gas generated in the vials was collected using a syringe and combined, and the total amount of gas generated and the amount of acetic acid generated were measured. The total amount of gas generated was measured using a gas chromatograph, and the amount of acetic acid generated was measured using a high-performance liquid chromatograph (HPLC). The measurement results are shown in Table 12. In Table 12, the amount of acetic acid generated is shown as a relative amount of acetic acid generated where the amount of acetic acid generated in a sample with no addition of methane emission inhibitor is 100%.

**[Table 11]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 20% |
| Essential Oil | Essential Oil preparation ("AGOLIN RUMINANT", Alltech) | 1% |

**[Table 12]**

| relative amount of acetic acid generated (unit: %) | | |
|---|---|---|
| | Feed C | Feed A |
| no addition of methane emission inhibitor | 100 | 100 |
| CNSL-blended feedstuff (20%) | 91 | 89 |
| Essential Oil (1%) | 108 | 105 |

As shown in Table 12, compared to the sample of gastric juice collected from the cows fed Feed C and supplemented with a methane emission inhibitor (cashew nut shell liquid, essential oil), the amount of acetic acid produced was lower in the sample of gastric juice collected from the cows fed Feed A and supplemented with the same methane emission inhibitor.

### <Experimental Example 6>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 13 were added. The methane emission inhibitors were added in amounts corresponding to the concentrations shown in Table 13 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Bacteroidota phylum bacteria (proportion of Bacteroidota phylum bacteria in the bacteria constituting the microbiota) calculated from the measured microbiota analysis is shown in Table 14. Table 14 shows a relative amount of Bacteroidota phylum bacteria where the amount of Bacteroidota phylum bacteria in a sample with no addition of methane emission inhibitor is 100%.

**[Table 13]**

| methane emission inhibitor | preparation added | addition concentration (concentration relative to substrate) |
|---|---|---|
| Essential Oil | Essential Oil preparation ("AGOLIN RUMINANT", Alltech) | 0.1% |
| 3-nitrooxypropanol (3-NOP) | reagent | 0.12% |

**[Table 14]**

| relative bacterial amount of Bacteroidota phylum bacteria (unit: %) | | |
|---|---|---|
| | Feed C | Feed A |
| no addition of methane emission inhibitor | 100 | 100 |
| Essential Oil (0.1%) | 90 | 98 |
| 3-NOP (0.12%) | 96 | 98 |

As shown in Table 14, compared to the sample of gastric juice collected from the cows fed Feed C and supplemented with a methane emission inhibitor (essential oil, 3-nitrooxypropanol), the relative bacterial amount of Bacteroidota phylum bacteria was higher in the sample of gastric juice collected from the cows fed Feed A and supplemented with the same methane emission inhibitor.

### <Experimental Example 7>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 15 were added. The methane emission inhibitors were added in amounts corresponding to the concentrations shown in Table 15 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Proteobacteria phylum bacteria (proportion of Proteobacteria phylum bacteria in the bacteria constituting the microbiota) calculated from the measured microbiota analysis is shown in Table 16. Table 16 shows a relative amount of Proteobacteria phylum bacteria where the amount of Proteobacteria phylum bacteria in a sample with no addition of methane emission inhibitor is 100%.

**[Table 15]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| | | 20% |
| Essential Oil | Essential Oil preparation ("AGOLIN RUMINANT", Alltech) | 20% |
| Tannic Acid | reagent | 6% 0% |
| | | 2 |
| 3-nitrooxypropanol (3-NOP) | reagent | 0.12% |
| sodium nitrate (NaNO₃) | reagent (NaNO₃+cystine) | 18% |
| Plant Extract | Plant Extract preparation ("Allin Plus", Orffa) | 1% |
| | | 20% |

**[Table 16]**

| relative bacterial amount of Proteobacteria phylum bacteria (unit: %) | | |
|---|---|---|
| | Feed C | Feed A |
| no addition of methane emission inhibitor | 100 | 100 |
| CNSL-blended feedstuff (5%) | 212 | 269 |
| CNSL-blended feedstuff (20%) | 306 | 591 |
| Essential Oil (20%) | 66 | 107 |
| Tannic Acid (6%) | 116 | 271 |
| Tannic Acid (20%) | 247 | 433 |
| 3-NOP (0.12%) | 156 | 171 |
| NaNO₃ (18%) | 125 | 303 |
| Plant Extract (1%) | 93 | 106 |
| Plant Extract (20%) | 95 | 98 |

As shown in Table 16, compared to the sample of gastric juice collected from the cows fed Feed C and supplemented with a methane emission inhibitor (cashew nut shell liquid, essential oil, tannic acid, 3-nitrooxypropanol, plant extract, sodium nitrate), the relative bacterial amount of Proteobacteria phylum bacteria was higher in the sample of gastric juice collected from the cows fed Feed A and supplemented with the same methane emission inhibitor.

### <Experimental Example 8>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 17 were added. The methane emission inhibitors were added in amounts corresponding to the concentrations shown in Table 17 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Firmicutes phylum bacteria (proportion of Firmicutes phylum bacteria in the bacteria constituting the microbiota) calculated from the measured microbiota analysis is shown in Table 18. Table 18 shows a relative amount of Firmicutes phylum bacteria where the amount of Firmicutes phylum bacteria in a sample with no addition of methane emission inhibitor is 100%.

**[Table 17]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Essential Oil | Essential Oil preparation ("AGOLIN RUMINANT", Alltech) | 0.1% |
| 3-nitrooxypropanol (3-NOP) | reagent | 0.12% |
| sodium nitrate (NaNO₃) | reagent (NaNO₃+cystine) | 18% |
| Plant Extract | Plant Extract preparation ("Allin Plus", Orffa) | 20% |

**[Table 18]**

| relative bacterial amount of Firmicutes phylum bacteria (unit: %) | | |
|---|---|---|
| | Feed C | Feed A |
| no addition of methane emission inhibitor | 100 | 100 |
| CNSL-blended feedstuff (5%) | 85 | 110 |
| Essential Oil (0.1%) | 80 | 101 |
| 3-NOP (0.12%) | 70 | 84 |
| NaNO₃ (18%) | 60 | 73 |
| Plant Extract (20%) | 91 | 103 |

As shown in Table 18, compared to the sample of gastric juice collected from the cows fed Feed C and supplemented with a methane emission inhibitor (cashew nut shell liquid, essential oil, 3-nitrooxypropanol, plant extract, sodium nitrate), the relative bacterial amount of Firmicutes phylum bacteria was higher in the sample of gastric juice collected from the cows fed Feed A and supplemented with the same methane emission inhibitor.

### <Experimental Example 9>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 19 were added. The methane emission inhibitors were added in amounts corresponding to the concentrations shown in Table 19 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Fibrobacterota phylum bacteria (proportion of Fibrobacterota phylum bacteria in the bacteria constituting the microbiota) calculated from the measured microbiota analysis is shown in Table 20. Table 20 shows a relative amount of Fibrobacterota phylum bacteria where the amount of Fibrobacterota phylum bacteria in a sample with no addition of methane emission inhibitor is 100%.

**[Table 19]**

| methane emission inhibitor | preparation added | addition concentration (concentration relative to substrate) |
|---|---|---|
| Tannic Acid | reagent | 6% |
| sodium nitrate (NaNO₃) | reagent (NaNO₃+cystine) | 18% |

**[Table 20]**

| relative bacterial amount of Fibrobacterota phylum bacteria (unit: %) | | |
|---|---|---|
| | Feed C | Feed A |
| no addition of methane emission inhibitor | 100 | 100 |
| Tannic Acid (6%) | 368 | 370 |
| NaNO₃ (18%) | 1 | 2 |

As shown in Table 20, compared to the sample of gastric juice collected from the cows fed Feed C and supplemented with a methane emission inhibitor (tannic acid, sodium nitrate), the relative bacterial amount of Fibrobacterota phylum bacteria was higher in the sample of gastric juice collected from the cows fed Feed A and supplemented with the same methane emission inhibitor.

### <Experimental Example 10>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 21 were added. The methane emission inhibitors were added in amounts corresponding to the concentrations shown in Table 21 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Prevotellaceae family bacteria (proportion of Prevotellaceae family bacteria in the bacteria constituting the microbiota) calculated from the measured microbiota analysis is shown in Table 22. Table 22 shows a relative amount of Prevotellaceae family bacteria where the amount of Prevotellaceae family bacteria in a sample with no addition of methane emission inhibitor is 100%.

**[Table 21]**

| methane emission inhibitor | preparation added | addition concentration (concentration relative to substrate) |
|---|---|---|
| Essential Oil | Essential Oil preparation ("AGOLIN RUMINANT", Alltech) | 0.1% |
| 3-nitrooxypropanol (3-NOP) | reagent | 0.12% |

**[Table 22]**

| relative bacterial amount of Prevotellaceae family bacteria (unit: %) | | |
|---|---|---|
| | Feed C | Feed A |
| no addition of methane emission inhibitor | 100 | 100 |
| Essential Oil (0.1%) | 90 | 98 |
| 3-NOP (0.12%) | 96 | 98 |

As shown in Table 22, compared to the sample of gastric juice collected from the cows fed Feed C and supplemented with a methane emission inhibitor (essential oil, 3-nitrooxypropanol), the relative bacterial amount of Prevotellaceae family bacteria was higher in the sample of gastric juice collected from the cows fed Feed A and supplemented with the same methane emission inhibitor.

### <Experimental Example 11>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 23 were added. The methane emission inhibitors were added in amounts corresponding to the concentrations shown in Table 23 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Bacteroidales RF-16 group family bacteria (proportion of Bacteroidales RF-16 group family bacteria in the bacteria constituting the microbiota) calculated from the measured microbiota analysis is shown in Table 24. Table 24 shows a relative amount of Bacteroidales RF-16 group family bacteria where the amount of Bacteroidales RF-16 group family bacteria in a sample with no addition of methane emission inhibitor is 100%.

**[Table 23]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Essential Oil | Essential Oil preparation ("AGOLIN RUMINANT", Alltech) | 0.1% |

**[Table 24]**

| relative bacterial amount of Bacteroidales RF-16 group family bacteria (unit: %) | | |
|---|---|---|
| | Feed C | Feed A |
| no addition of methane emission inhibitor | 100 | 100 |
| CNSL-blended feedstuff (5%) | 17 | 23 |
| Essential Oil (0.1%) | 108 | 113 |

As shown in Table 24, compared to the sample of gastric juice collected from the cows fed Feed C and supplemented with a methane emission inhibitor (cashew nut shell liquid, essential oil), the relative bacterial amount of Bacteroidales RF-16 group family bacteria was higher in the sample of gastric juice collected from the cows fed Feed A and supplemented with the same methane emission inhibitor.

### <Experimental Example 12>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 25 were added. The methane emission inhibitors were added in amounts corresponding to the concentrations shown in Table 25 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Succinivibrionaceae family bacteria (proportion of Succinivibrionaceae family bacteria in the bacteria constituting the microbiota) calculated from the measured microbiota analysis is shown in Table 26. Table 26 shows a relative amount of Succinivibrionaceae family bacteria where the amount of Succinivibrionaceae family bacteria in a sample with no addition of methane emission inhibitor is 100%.

**[Table 25]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| | | 20% |
| Essential Oil | Essential Oil preparation ("AGOLIN RUMINANT", Alltech) | 20% |
| Tannic Acid | reagent | 6% |
| | | 20% |
| 3-nitrooxypropanol (3-NOP) | reagent | 0.12% |
| sodium nitrate (NaNO₃) | reagent (NaNO₃+cystine) | 18% |
| Plant Extract | Plant Extract preparation ("Allin Plus", Orffa) | 1% |
| | | 20% |

**[Table 26]**

| relative bacterial amount of Succinivibrionaceae family bacteria (unit: %) | | |
|---|---|---|
| | Feed C | Feed A |
| addition of methane emission inhibitor | 100 | 100 |
| CNSL-blended feedstuff (5%) | 214 | 274 |
| CNSL-blended feedstuff (20%) | 309 | 607 |
| Essential Oil (20%) | 66 | 108 |
| Tannic Acid (6%) | 115 | 277 |
| Tannic Acid (20%) | 248 | 442 |
| 3-NOP (0.12%) | 157 | 169 |
| NaNO₃ (18%) | 123 | 305 |
| Plant Extract (1%) | 93 | 106 |
| Plant Extract (20%) | 95 | 99 |

As shown in Table 26, compared to the sample of gastric juice collected from the cows fed Feed C and supplemented with a methane emission inhibitor (cashew nut shell liquid, essential oil, tannic acid, 3-nitrooxypropanol, plant extract, sodium nitrate), the relative bacterial amount of Succinivibrionaceae family bacteria was higher in the sample of gastric juice collected from the cows fed Feed A and supplemented with the same methane emission inhibitor.

### <Experimental Example 13>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 27 were added. The methane emission inhibitors were added in amounts corresponding to the concentrations shown in Table 27 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Lachnospiraceae family bacteria (proportion of Lachnospiraceae family bacteria in the bacteria constituting the microbiota) calculated from the measured microbiota analysis is shown in Table 28. Table 28 show a relative amount of Lachnospiraceae family bacteria where the amount of Lachnospiraceae family bacteria in a sample with no addition of methane emission inhibitor is 100%.

**[Table 27]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Essential Oil | Essential Oil preparation ("AGOLIN RUMINANT", Alltech) | 20% |
| 3-nitrooxypropanol (3-NOP) | reagent | 0.12% |
| sodium nitrate (NaNO₃) | reagent (NaNO₃+cystine) | 18% |

**[Table 28]**

| relative bacterial amount of Lachnospiraceae family bacteria(unit: %) | | |
|---|---|---|
| | Feed C | Feed A |
| no addition of methane emission inhibitor | 100 | 100 |
| CNSL-blended feedstuff (5%) | 109 | 134 |
| Essential Oil (20%) | 300 | 340 |
| 3-NOP (0.12%) | 92 | 112 |
| NaNO₃ (18%) | 68 | 84 |

As shown in Table 28, compared to the sample of gastric juice collected from the cows fed Feed C and supplemented with a methane emission inhibitor (cashew nut shell liquid, essential oil, 3-nitrooxypropanol, sodium nitrate), the relative bacterial amount of Lachnospiraceae family bacteria was higher in the sample of gastric juice collected from the cows fed Feed A and supplemented with the same methane emission inhibitor.

### <Experimental Example 14>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 29 were added. The methane emission inhibitors were added in amounts corresponding to the concentrations shown in Table 29 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Ruminococcaceae family bacteria (proportion of Ruminococcaceae family bacteria in the bacteria constituting the microbiota) calculated from the measured microbiota analysis is shown in Table 30. Table 30 shows a relative amount of Ruminococcaceae family bacteria where the amount of Ruminococcaceae family bacteria in a sample with no addition of methane emission inhibitor is 100%.

**[Table 29]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Essential Oil | Essential Oil preparation ("AGOLIN RUMINANT", Alltech) | 0.1% |
| sodium nitrate (NaNO₃) | reagent (NaNO₃+cystine) | 18% |
| Plant Extract | Plant Extract preparation ("Allin Plus", Orffa) | 1% |
| | | 20% |

**[Table 30]**

| relative bacterial amount of Ruminococcaceae family bacteria (unit: %) | | |
|---|---|---|
| | Feed C | Feed A |
| no addition of methane emission inhibitor | 100 | 100 |
| CNSL-blended feedstuff (5%) | 74 | 91 |
| Essential Oil (0.1%) | 72 | 80 |
| NaNO₃ (18%) | 87 | 95 |
| Plant Extract (1%) | 85 | 87 |
| Plant Extract (20%) | 79 | 83 |

As shown in Table 30, compared to the sample of gastric juice collected from the cows fed Feed C and supplemented with a methane emission inhibitor (cashew nut shell liquid, essential oil, plant extract, sodium nitrate), the relative bacterial amount of Ruminococcaceae family bacteria was higher in the sample of gastric juice collected from the cows fed Feed A and supplemented with the same methane emission inhibitor.

### <Experimental Example 15>

### feeding test

A feeding test was conducted in the same manner as in Experimental Example 1. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A or Feed C) and each methane emission inhibitor shown in Table 31 were added. The methane emission inhibitors were added in amounts corresponding to the concentrations shown in Table 31 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Fibrobacteraceae family bacteria (proportion of Fibrobacteraceae family bacteria in the bacteria constituting the microbiota) calculated from the measured microbiota analysis is shown in Table 32. Table 32 shows a relative amount of Fibrobacteraceae family bacteria where the amount of Fibrobacteraceae family bacteria in a sample with no addition of methane emission inhibitor is 100%.

**[Table 31]**

| methane emission inhibitor | preparation added | addition concentration (concentration relative to substrate) |
|---|---|---|
| Tannic Acid | reagent | 6% |
| sodium nitrate (NaNO₃) | reagent (NaNO₃+cystine) | 18% |

**[Table 32]**

| relative bacterial amount of Fibrobacteraceae family bacteria (unit: %) | | |
|---|---|---|
| | Feed C | Feed A |
| no addition of methane emission inhibitor | 100 | 100 |
| Tannic Acid (6%) | 368 | 370 |
| NaNO₃ (18%) | 1 | 2 |

As shown in Table 32, compared to the sample of gastric juice collected from the cows fed Feed C and supplemented with a methane emission inhibitor (tannic acid, sodium nitrate), the relative bacterial amount of Fibrobacteraceae family bacteria was higher in the sample of gastric juice collected from the cows fed Feed A and supplemented with the same methane emission inhibitor.

### <Experimental Example 16>

### feeding test

Six Holstein cows (lactating cows) were fed a low-protein feedstuff (Feed A1) including a cattle preparation containing rumen-protected lysine ("AjiPro(registered trademark)-L", manufactured by Ajinomoto Co., Inc.) daily for three weeks. Gastric juice was orally collected from the six cows after three weeks of feeding. After collecting the gastric juice, the control feedstuff (Feed C1) was fed daily for three weeks. Gastric juice was again orally collected from the six cows after three weeks of feeding. The collected gastric juice was used in the culture test described later.

The feedstuff compositions of Feed A1 and Feed C1 are shown in Table 33. The component values of Feed A1 and Feed C1 are shown in Table 34. The component values shown in Table 34 were obtained by accumulating, according to the composition shown in Table 33, the component values obtained by measuring the components of each feedstuff ingredients by near-infrared spectroscopy (NIR) or wet chemical analysis, or the component values calculated based on the feed component table included in the feed design software AMTS. The crude protein content of Feed A1 ("CP" in Table 34) was about 1.5% DM lower than that of Feed C1. Feed A1 was supplemented with a cow preparation containing rumen-protected lysine (AjiPro(registered trademark)-L) so that the sufficiency rate for lysine requirements was similar to that of Feed C1.

**[Table 33]**

| feedstuff composition (% DM) | Feed A1 | Feed C1 |
|---|---|---|
| Corn Silage | 10 | 13 |
| Italian Ryegrass Silage | 4 | 6 |
| Oat Hay | 20 | 17 |
| Alfalfa Hay | 10 | 11 |
| robot compound feedstuff (Concentrate at the robot) | 23 | 23 |
| PMR-blended feedstuff (Concentrate in PMR) | 27 | 25 |
| Soybean Meal | 0 | 4 |
| Corn Grain Ground | 4 | 0 |
| AjiPro^{®}-L | 0.37 | 0 |
| Minerals and Vitamins | 2 | 2 |
| total | 100 | 100 |

**[Table 34]**

| feedstuff component value | Feed A1 | Feed C1 |
|---|---|---|
| CP (% DM) | 15.53 | 17.07 |
| RDP (% DM) | 9.21 | 10.30 |
| ME (Mcal) | 66.76 | 65.68 |
| MP (g) | 2976 | 3068 |
| MP from Bact (g) | 1794 | 1728 |
| MP from RUP (g) | 1182 | 1340 |
| aNDFom (% DM) | 31.15 | 32.16 |
| Sugar (% DM) | 6.8 | 6.8 |
| Starch (% DM) | 26.6 | 23.3 |
| Met (g) | 65.2 | 65.7 |
| Lys (g) | 212.9 | 197.2 |

Each component value described in Table 34 means the following.
· CP; Crude Protein
· RDP; Rumen Degradable Protein
· ME; metabolizable energy
· MP; metabolizable protein
· MP from Bact; Metabolizable Protein from Bacterial Protein
· MP from RUP; Metabolizable Protein from Rumen Undegradable Protein
· aNDFom; heat resistant α-amylase treated neutral detergent fiber (amylase Neutral Detergent Fiber organic matter)
· Met; Methionine
· Lys; Lysine

Here, ME, MP, MP from Bact, MP from RUP, Met, and Lys are the amounts per 27 kg of feedstuff (about daily intake (dry matter) of a cow).

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 35 were added. The methane emission inhibitors were added in amounts corresponding to the concentrations shown in Table 35 relative to the substrate. The vials containing the substrate and each methane emission inhibitor, and vials without these additives were sealed and placed in an incubator, and anaerobic culture was performed at 39°C for 24 hr with shaking. Six hours and 24 hours after completion of culture, the gas generated in the vials was collected using a syringe and combined, and the total amount of gas generated and the amount of propionic acid generated were measured. The total amount of gas generated was measured using a gas chromatograph, and the amount of propionic acid generated was measured using a high-performance liquid chromatograph (HPLC). The measurement results are shown in Table 36. In Table 36, the amount of propionic acid generated is shown as a relative amount of propionic acid generated where the amount of propionic acid generated in a sample with no addition of methane emission inhibitor is 100%.

**[Table 35]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| | | 20% |
| Tannic Acid | reagent | 6% |
| 3-nitrooxypropanol (3-NOP) | reagent | 0.12% |
| Essential Oil | Essential Oil preparation ("AGOLIN RUMINANT", Alltech) | 0.1% |

**[Table 36]**

| relative amount of propionic acid generated (unit: %) | | |
|---|---|---|
| | Feed C1 | Feed A1 |
| no addition of methane emission inhibitor | 100 | 100 |
| CNSL-blended feedstuff (5%) | 102 | 106 |
| CNSL-blended feedstuff (20%) | 120 | 125 |
| Essential Oil (0.1%) | 98 | 100 |
| Tannic Acid (6%) | 101 | 105 |
| 3-NOP (0.12%) | 107 | 113 |

As shown in Table 36, compared to the sample of gastric juice collected from the cows fed Feed C1 and supplemented with a methane emission inhibitor (cashew nut shell liquid, essential oil, tannic acid, 3-nitrooxypropanol), the amount of propionic acid generated was higher in the sample of gastric juice collected from the cows fed Feed A1 and supplemented with the same methane emission inhibitor.

### <Experimental Example 17>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 37 were added. The methane emission inhibitors were added in amounts corresponding to the concentrations shown in Table 37 relative to the substrate. The vials containing the substrate and each methane emission inhibitor, and vials without these additives were sealed and placed in an incubator, and anaerobic culture was performed at 39°C for 24 hr with shaking. Six hours and 24 hours after completion of culture, the gas generated in the vials was collected using a syringe and combined, and the total amount of gas generated and the amount of butyric acid generated were measured. The total amount of gas generated was measured using a gas chromatograph, and the amount of butyric acid generated was measured using a high-performance liquid chromatograph (HPLC). The measurement results are shown in Table 38. In Table 38, the amount of butyric acid generated is shown as a relative amount of butyric acid generated where the amount of butyric acid generated in a sample with no addition of methane emission inhibitor is 100%.

**[Table 37]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Essential Oil | Essential Oil preparation ("AGOLIN RUMINANT", Alltech) | 0.1% |

**[Table 38]**

| relative amount of butyric acid generated (unit: %) | | |
|---|---|---|
| | Feed C1 | Feed A1 |
| no addition of methane emission inhibitor | 100 | 100 |
| CNSL-blended feedstuff (5%) | 103 | 109 |
| Essential Oil(0.1%) | 95 | 106 |

As shown in Table 38, compared to the sample of gastric juice collected from the cows fed Feed C1 and supplemented with a methane emission inhibitor (cashew nut shell liquid, essential oil), the amount of butyric acid generated was higher in the sample of gastric juice collected from the cows fed Feed A1 and supplemented with the same methane emission inhibitor.

### <Experimental Example 18>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 39 were added. The methane emission inhibitors were added in amounts corresponding to the concentrations shown in Table 39 relative to the substrate. The vials containing the substrate and each methane emission inhibitor, and vials without these additives were sealed and placed in an incubator, and anaerobic culture was performed at 39°C for 24 hr with shaking. Six hours and 24 hours after completion of culture, the gas generated in the vials was collected using a syringe and combined, and the total amount of gas generated and the amount of acetic acid generated were measured. The total amount of gas generated was measured using a gas chromatograph, and the amount of acetic acid generated was measured using a high-performance liquid chromatograph (HPLC). The measurement results are shown in Table 40. In Table 40, the amount of acetic acid generated is shown as a relative amount of acetic acid generated where the amount of acetic acid generated in a sample with no addition of methane emission inhibitor is 100%.

**[Table 39]**

| methane emission inhibitor | preparation added | addition concentration (concentration relative to substrate) |
|---|---|---|
| Tannic Acid | reagent | 6% |
| Essential Oil | Essential Oil preparation ("AGOLIN RUMINANT", Alltech) | 0.1% |

**[Table 40]**

| relative amount of acetic acid generated (unit: %) | | |
|---|---|---|
| | Feed C1 | Feed A1 |
| no addition of methane emission inhibitor | 100 | 100 |
| Essential Oil (0.1%) | 97 | 93 |
| Tannic Acid (6%) | 97 | 93 |

As shown in Table 40, compared to the sample of gastric juice collected from the cows fed Feed C1 and supplemented with a methane emission inhibitor (essential oil, tannic acid), the amount of acetic acid generated was higher in the sample of gastric juice collected from the cows fed Feed A1 and supplemented with the same methane emission inhibitor.

### <Experimental Example 19>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 41 were added. The methane emission inhibitors were added in amounts corresponding to the concentrations shown in Table 41 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Selenomonadaceae family bacteria (proportion of Selenomonadaceae family bacteria in the bacteria constituting the microbiota) calculated from the measured microbiota analysis is shown in Table 42. Table 42 shows a relative amount of Selenomonadaceae family bacteria where the amount of Selenomonadaceae family bacteria in a sample with no addition of methane emission inhibitor is 100%.

**[Table 41]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 20% |
| Tannic Acid | reagent | 6% |
| 3-nitrooxypropanol (3-NOP) | reagent | 0.12% |

**[Table 42]**

| relative bacterial amount of Selenomonadaceae family bacteria (unit: %) | | |
|---|---|---|
| | Feed C1 | Feed A1 |
| no addition of methane emission inhibitor | 100 | 100 |
| CNSL-blended feedstuff (20%) | 270 | 293 |
| Tannic Acid (6%) | 119 | 126 |
| 3-NOP (0.12%) | 135 | 162 |

As shown in Table 42, compared to the sample of gastric juice collected from the cows fed Feed C1 and supplemented with a methane emission inhibitor (cashew nut shell liquid, 3-nitrooxypropanol, tannic acid), the relative bacterial amount of Selenomonadaceae family bacteria was higher in the sample of gastric juice collected from the cows fed Feed A1 and supplemented with the same methane emission inhibitor.

### <Experimental Example 20>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 43 were added. The methane emission inhibitors were added in amounts corresponding to the concentrations shown in Table 43 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Bacteroidota phylum bacteria (proportion of Bacteroidota phylum bacteria in the bacteria constituting the microbiota) calculated from the measured microbiota analysis is shown in Table 44. Table 44 shows a relative amount of Bacteroidota phylum bacteria where the amount of Bacteroidota phylum bacteria in a sample with no addition of methane emission inhibitor is 100%.

**[Table 43]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| | | 20% |
| 3-nitrooxypropanol (3-NOP) | 3-NOPpreparation ("Bovaer", DSM) | 0.12% |
| Essential Oil | Essential Oil preparation ("AGOLIN RUMINANT", Alltech) | 0.1% |

**[Table 44]**

| relative bacterial amount of Bacteroidota phylum bacteria (unit: %) | | |
|---|---|---|
| | Feed C1 | Feed A1 |
| no addition of methane emission inhibitor | 100 | 100 |
| CNSL-blended feedstuff (5%) | 86 | 93 |
| CNSL-blended feedstuff (20%) | 72 | 80 |
| 3-NOP (0.12%) | 100 | 104 |
| Essential Oil (0.1%) | 100 | 105 |

As shown in Table 44, compared to the sample of gastric juice collected from the cows fed Feed C1 and supplemented with a methane emission inhibitor (cashew nut shell liquid, essential oil, 3-nitrooxypropanol), the relative bacterial amount of Bacteroidota phylum bacteria was higher in the sample of gastric juice collected from the cows fed Feed A1 and supplemented with the same methane emission inhibitor.

### <Experimental Example 21>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 45 were added. The methane emission inhibitors were added in amounts corresponding to the concentrations shown in Table 45 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Proteobacteria phylum bacteria (proportion of Proteobacteria phylum bacteria in the bacteria constituting the microbiota) calculated from the measured microbiota analysis is shown in Table 46. Table 46 shows a relative amount of Proteobacteria phylum bacteria where the amount of Proteobacteria phylum bacteria in a sample with no addition of methane emission inhibitor is 100%.

**[Table 45]**

| methane emission inhibitor | preparation added | addition concentration (concentration relative to substrate) |
|---|---|---|
| Tannic Acid | reagent | 6% |
| 3-nitrooxypropanol (3-NOP) | reagent | 0.12% |
| Bromoform | reagent | 0.034% |

**[Table 46]**

| relative bacterial amount of Proteobacteria phylum bacteria (unit: %) | | |
|---|---|---|
| | Feed C1 | Feed A1 |
| no addition of methane emission inhibitor | 100 | 100 |
| Tannic Acid (6%) | 92 | 111 |
| 3-NOP (0.12%) | 91 | 100 |
| Bromoform (0.034%) | 146 | 173 |

As shown in Table 46, compared to the sample of gastric juice collected from the cows fed Feed C1 and supplemented with a methane emission inhibitor (tannic acid, 3-nitrooxypropanol, bromoform), the relative bacterial amount of Proteobacteria phylum bacteria was higher in the sample of gastric juice collected from the cows fed Feed A1 and supplemented with the same methane emission inhibitor.

### <Experimental Example 22>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 47 were added. The methane emission inhibitors were added in amounts corresponding to the concentrations shown in Table 47 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Fibrobacterota phylum bacteria (proportion of Fibrobacterota phylum bacteria in the bacteria constituting the microbiota) calculated from the measured microbiota analysis is shown in Table 48. Table 48 shows a relative amount of Fibrobacterota phylum bacteria where the amount of Fibrobacterota phylum bacteria in a sample with no addition of methane emission inhibitor is 100%.

**[Table 47]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Tannic Acid | reagent | 6% |
| Bromoform | reagent | 0.034% |

**[Table 48]**

| relative bacterial amount of Fibrobacterota phylum bacteria (unit: %) | | |
|---|---|---|
| | Feed C1 | Feed A1 |
| no addition of methane emission inhibitor | 100 | 100 |
| CNSL-blended feedstuff (5%) | 86 | 93 |
| Tannic Acid (6%) | 190 | 326 |
| Bromoform (0.034%) | 8 | 20 |

As shown in Table 48, compared to the sample of gastric juice collected from the cows fed Feed C1 and supplemented with a methane emission inhibitor (cashew nut shell liquid, tannic acid, bromoform), the relative bacterial amount of Fibrobacterota phylum bacteria was higher in the sample of gastric juice collected from the cows fed Feed A1 and supplemented with the same methane emission inhibitor.

### <Experimental Example 23>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 49 were added. The methane emission inhibitors were added in amounts corresponding to the concentrations shown in Table 49 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Prevotellaceae family bacteria (proportion of Prevotellaceae family bacteria in the bacteria constituting the microbiota) calculated from the measured microbiota analysis is shown in Table 50. Table 50 shows a relative amount of Prevotellaceae family bacteria where the amount of Prevotellaceae family bacteria in a sample with no addition of methane emission inhibitor is 100%.

**[Table 49]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| | | 20% |
| 3-nitrooxypropanol (3-NOP) | reagent | 0.12% |
| Essential Oil | Essential Oil preparation ("AGOLIN RUMINANT", Alltech) | 0.1% |

**[Table 50]**

| relative bacterial amount of Prevotellaceae family bacteria (unit: %) | | |
|---|---|---|
| | Feed C1 | Feed A1 |
| no addition of methane emission inhibitor | 100 | 100 |
| CNSL-blended feedstuff (5%) | 84 | 87 |
| CNSL-blended feedstuff (20%) | 72 | 88 |
| 3-NOP (0.12%) | 104 | 107 |
| Essential Oil (0.1%) | 104 | 106 |

As shown in Table 50, compared to the sample of gastric juice collected from the cows fed Feed C1 and supplemented with a methane emission inhibitor (cashew nut shell liquid, essential oil, 3-nitrooxypropanol), the relative bacterial amount of Prevotellaceae family bacteria was higher in the sample of gastric juice collected from the cows fed Feed A1 and supplemented with the same methane emission inhibitor.

### <Experimental Example 24>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 51 were added. The methane emission inhibitors were added in amounts corresponding to the concentrations shown in Table 51 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Bacteroidales RF-16 group family bacteria (proportion of Bacteroidales RF-16 group family bacteria in the bacteria constituting the microbiota) calculated from the measured microbiota analysis is shown in Table 52. Table 52 shows a relative amount of Bacteroidales RF-16 group family bacteria where the amount of Bacteroidales RF-16 group family bacteria in a sample with no addition of methane emission inhibitor is 100%.

**[Table 51]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| | | 20% |
| Tannic Acid | reagent | 6% |
| 3-nitrooxypropanol (3-NOP) | 3-NOPpreparation ("Bovaer", DSM) | 0.12% |
| Essential Oil | Essential Oil preparation ("AGOLIN RUMINANT", Alltech) | 0.1% |
| Bromoform | reagent | 0.034% |

**[Table 52]**

| relative bacterial amount of Bacteroidales RF-16 group family bacteria (unit: %) | | |
|---|---|---|
| | Feed C1 | Feed A1 |
| no addition of methane emission inhibitor | 100 | 100 |
| CNSL-blended feedstuff (5%) | 63 | 75 |
| CNSL-blended feedstuff (20%) | 17 | 31 |
| Tannic Acid (6%) | 68 | 92 |
| 3-NOP (0.12%) | 93 | 107 |
| Essential Oil (0.1%) | 90 | 98 |
| Bromoform (0.034%) | 49 | 69 |

As shown in Table 52, compared to the sample of gastric juice collected from the cows fed Feed C1 and supplemented with a methane emission inhibitor (cashew nut shell liquid, essential oil, tannic acid, 3-nitrooxypropanol, bromoform), the relative bacterial amount of Bacteroidales RF-16 group family bacteria was higher in the sample of gastric juice collected from the cows fed Feed A1 and supplemented with the same methane emission inhibitor.

### <Experimental Example 25>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 53 were added. The methane emission inhibitors were added in amounts corresponding to the concentrations shown in Table 53 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Succinivibrionaceae family bacteria (proportion of Succinivibrionaceae family bacteria in the bacteria constituting the microbiota) calculated from the measured microbiota analysis is shown in Table 54. Table 54 shows a relative amount of Succinivibrionaceae family bacteria where the amount of Succinivibrionaceae family bacteria in a sample with no addition of methane emission inhibitor is 100%.

**[Table 53]**

| methane emission inhibitor | preparation added | addition concentration (concentration relative to substrate) |
|---|---|---|
| Tannic Acid | reagent | 6% |
| 3-nitrooxypropanol (3-NOP) | reagent | 0.12% |
| Bromoform | reagent | 0.034% |

**[Table 54]**

| relative bacterial amount of Succinivibrionaceae family bacteria (unit: %) | | |
|---|---|---|
| | Feed C1 | Feed A1 |
| no addition of methane emission inhibitor | 100 | 100 |
| Tannic Acid (6%) | 90 | 113 |
| 3-NOP (0.12%) | 92 | 101 |
| Bromoform (0.034%) | 147 | 177 |

As shown in Table 54, compared to the sample of gastric juice collected from the cows fed Feed C1 and supplemented with a methane emission inhibitor (tannic acid, 3-nitrooxypropanol, bromoform), the relative bacterial amount of Succinivibrionaceae family bacteria was higher in the sample of gastric juice collected from the cows fed Feed A1 and supplemented with the same methane emission inhibitor.

### <Experimental Example 26>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 55 were added. The methane emission inhibitors were added in amounts corresponding to the concentrations shown in Table 55 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Lachnospiraceae family bacteria (proportion of Lachnospiraceae family bacteria in the bacteria constituting the microbiota) calculated from the measured microbiota analysis is shown in Table 56. Table 56 shows a relative amount of Lachnospiraceae family bacteria where the amount of Lachnospiraceae family bacteria in a sample with no addition of methane emission inhibitor is 100%.

**[Table 55]**

| methane emission inhibitor | preparation added | addition concentration (concentration relative to substrate) |
|---|---|---|
| Bromoform | reagent | 0.034% |

**[Table 56]**

| relative bacterial amount of Lachnospiraceae family bacteria (unit: %) | | |
|---|---|---|
| | Feed C1 | Feed A1 |
| no addition of methane emission inhibitor | 100 | 100 |
| Bromoform (0.034%) | 69 | 104 |

As shown in Table 56, compared to the sample of gastric juice collected from the cows fed Feed C1 and supplemented with a methane emission inhibitor (bromoform), the relative bacterial amount of Lachnospiraceae family bacteria was higher in the sample of gastric juice collected from the cows fed Feed A1 and supplemented with the same methane emission inhibitor.

### <Experimental Example 27>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 57 were added. The methane emission inhibitors were added in amounts corresponding to the concentrations shown in Table 57 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Ruminococcaceae family bacteria (proportion of Ruminococcaceae family bacteria in the bacteria constituting the microbiota) calculated from the measured microbiota analysis is shown in Table 58. Table 58 shows a relative amount of Ruminococcaceae family bacteria where the amount of Ruminococcaceae family bacteria in a sample with no addition of methane emission inhibitor is 100%.

**[Table 57]**

| methane emission inhibitor | preparation added | addition concentration (concentration relative to substrate) |
|---|---|---|
| 3-nitrooxypropanol (3-NOP) | 3-NOPpreparation ("Bovaer", DSM) | 0.12% |
| Essential Oil | Essential Oil preparation ("AGOLIN RUMINANT", Alltech) | 0.1% |

**[Table 58]**

| relative bacterial amount of Ruminococcaceae family bacteria (unit: %) | | |
|---|---|---|
| | Feed C1 | Feed A1 |
| no addition of methane emission inhibitor | 100 | 100 |
| 3-NOP (0.12%) | 69 | 77 |
| Essential Oil (0.1%) | 91 | 92 |

As shown in Table 58, compared to the sample of gastric juice collected from the cows fed Feed C1 and supplemented with a methane emission inhibitor (essential oil, 3-nitrooxypropanol), the relative bacterial amount of Ruminococcaceae family bacteria was higher in the sample of gastric juice collected from the cows fed Feed A1 and supplemented with the same methane emission inhibitor.

### <Experimental Example 28>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 59 were added. The methane emission inhibitors were added in amounts corresponding to the concentrations shown in Table 59 relative to the substrate. The vials containing the substrate and each methane emission inhibitor, and vials without these additives were sealed and placed in an incubator, and anaerobic culture was performed at 39°C for 24 hr with shaking. Thereafter, a microbiota analysis was performed using the obtained culture medium. The microbiota analysis was performed using amplicon sequencing method targeting the bacterial 16S ribosomal RNA gene. The amount of Fibrobacteraceae family bacteria (proportion of Fibrobacteraceae family bacteria in the bacteria constituting the microbiota) calculated from the measured microbiota analysis is shown in Table 60. Table 60 shows a relative amount of Fibrobacteraceae family bacteria where the amount of Fibrobacteraceae family bacteria in a sample with no addition of methane emission inhibitor is 100%.

**[Table 59]**

| methane emission inhibitor | preparation added | addition concentration (concentration relative to substrate) |
|---|---|---|
| cashew nut shell liquid (CNSL) | CNSL-blended feedstuff ("Ruminup M", SDS Biotech K.K.) | 5% |
| Tannic Acid | reagent | 6% |
| Bromoform | reagent | 0.034% |

**[Table 60]**

| Fibrobacteraceae family bacteria relative bacterial amount (unit: %) | | |
|---|---|---|
| | Feed C1 | Feed A1 |
| no addition of methane emission inhibitor | 100 | 100 |
| CNSL-blended feedstuff (5%) | 86 | 93 |
| Tannic Acid (6%) | 190 | 326 |
| Bromoform (0.034%) | 8 | 20 |

As shown in Table 60, compared to the sample of gastric juice collected from the cows fed Feed C1 and supplemented with a methane emission inhibitor (cashew nut shell liquid, tannic acid, bromoform), the relative bacterial amount of Fibrobacteraceae family bacteria was higher in the sample of gastric juice collected from the cows fed Feed A1 and supplemented with the same methane emission inhibitor.

### <Experimental Example 29>

### feeding test

A feeding test was conducted in the same manner as in Experimental Example 16. The collected gastric juice was used in the culture test described later.

### culture test

Using 100 mL vials, equal volumes of gastric juice collected in the feeding test (described above) and McDougal's buffer (McDougal, 1948) were mixed per sample (25 mL each), and a substrate (0.5 g per sample) made from crushed feedstuff (Feed A1 or Feed C1) and each methane emission inhibitor shown in Table 61 were added. The methane emission inhibitors were added in amounts corresponding to the concentrations shown in Table 61 relative to the substrate. The vials containing the substrate and each methane emission inhibitor, and vials without these additives were sealed and placed in an incubator, and anaerobic culture was performed at 39°C for 24 hr with shaking. Six hours and 24 hours after completion of culture, the gas generated in the vials was measured and collected using a syringe, and the amount of methane generated was measured using a gas chromatograph. The measurement results are shown in Table 62. The amount of methane generated shown in Table 62 is the total amount of methane produced during 6 hr of cultivation and the amount of methane produced during the subsequent 18 hr of cultivation. In Table 62, the amount of methane generated is shown as a relative amount of methane generated where the amount of methane generated in a sample with no addition of methane emission inhibitor is 100%.

**[Table 61]**

| methane emission inhibitor | preparation added | addition concentration (concentration relative to substrate) |
|---|---|---|
| Tannic Acid | reagent | 6% |
| 3-nitrooxypropanol (3-NOP) | reagent | 0.12% |
| Bromoform | reagent | 0.034% |

**[Table 62]**

| relative amount of methane generated (unit: %) | | |
|---|---|---|
| | Feed C1 | Feed A1 |
| no addition of methane emission inhibitor | 100 | 100 |
| Tannic Acid (6%) | 77 | 65 |
| 3-NOP (0.12%) | 3.6 | 2.4 |
| Bromoform (0.034%) | 3.4 | 2.7 |

As shown in Table 62, compared to the sample of gastric juice collected from the cows fed Feed C1 and supplemented with a methane emission inhibitor (tannic acid, 3-nitrooxypropanol, bromoform), the amount of methane generated was lower in the sample of gastric juice collected from the cows fed Feed A1 and supplemented with the same methane emission inhibitor. In the sample of gastric juice collected from the cows fed Feed A1 and supplemented with a methane emission inhibitor, methane production was synergistically suppressed.

The results of Experimental Examples 1 to 29 suggests that methane emission from ruminants can be effectively suppressed by feeding ruminants a feedstuff containing a methane emission inhibitor and RPAA in combination.

### [Industrial Applicability]

According to the present invention, a feedstuff that can effectively suppress methane emission by ruminants can be provided.

In addition, according to the present invention, a method for raising ruminants that can suppress methane emission by ruminants and can raise ruminants can be provided.

In addition, according to the present invention, a method for suppressing methane emission by ruminants can be provided.

In addition, according to the present invention, a feedstuff that can increase the propionic acid concentration in the rumen of ruminants can be provided. The present invention can provide a feedstuff that can increase the proportion of Selenomonadaceae family bacteria in the bacteria constituting the rumen microbiota of ruminants.

In addition, according to the present invention, a feedstuff that can increase the butyric acid concentration in the rumen of ruminants can be provided. The present invention can provide a feedstuff that can decrease the acetic acid concentration in the rumen of ruminants. The present invention can provide a feedstuff that can increase the proportion of Lachnospiraceae family bacteria in the bacteria constituting the rumen microbiota of ruminants.

In addition, according to the present invention, a feedstuff that can increase the proportion of at least one selected from the group consisting of Bacteroidota phylum bacteria (e.g., Prevotellaceae family bacteria, Bacteroidales RF-16 group family bacteria, etc.), Proteobacteria phylum bacteria (e.g., Succinivibrionaceae family bacteria, etc.), Firmicutes phylum bacteria (e.g., Ruminococcaceae family bacteria, etc.), and Fibrobacterota phylum bacteria (e.g., Fibrobacteraceae family bacteria, etc.), in the bacteria constituting the rumen microbiota of ruminants can be provided.

This application is based on a patent application No. 2023-219983 filed in Japan (filing date: December 26, 2023), the contents of which are incorporated in full herein.

## Claims

1. A feedstuff for ruminants, comprising a methane emission inhibitor and a rumen-protected amino acid in combination.

2. The feedstuff according to claim 1, which has a higher action in increasing a propionic acid concentration in the rumen of ruminants compared to the aforementioned methane emission inhibitor.

3. The feedstuff according to claim 1, which has a higher action in increasing the proportion of Selenomonadaceae family bacteria in the bacteria constituting the rumen microbiota of ruminants, compared to the aforementioned methane emission inhibitor.

4. The feedstuff according to claim 1, wherein the aforementioned amino acid comprises an essential amino acid.

5. The feedstuff according to claim 1, wherein the aforementioned amino acid comprises at least one selected from the group consisting of lysine, methionine, arginine, and histidine.

6. The feedstuff according to claim 1, wherein the aforementioned methane emission inhibitor comprises at least one selected from the group consisting of organic compounds containing a nitrooxy group, cashew nut shell liquids, polyphenols, nitrates, essential oils, plant extracts, halogenated methane analogues, fatty acid calcium salts, saponins, and organic acids.

7. The feedstuff according to claim 1, wherein the aforementioned methane emission inhibitor comprises at least one selected from the group consisting of 3-nitrooxypropanol, cashew nut shell liquids, tannic acid, essential oils, plant extracts, and bromoform.

8. The feedstuff according to claim 1, wherein a crude protein content of the aforementioned feedstuff is 0.1 to 10% DM lower than a crude protein content of a feedstuff used up to the start of feeding the aforementioned feedstuff.

9. The feedstuff according to claim 1, wherein a crude protein content is 10 to 20% DM.

10. A method for raising a ruminant, comprising feeding the ruminant the feedstuff according to any one of claims 1 to 9.

11. A method for suppressing methane emission by a ruminant, comprising feeding the ruminant the feedstuff according to any one of claims 1 to 9.
